(19) Europäisches Patentamt
European Patent Office
Office européen des brevets

(11) EP 4 432 056 A1

(12) EUROPEAN PATENT APPLICATION
published in accordance with Art. 153(4) EPC

(43) Date of publication:
18.09.2024 Bulletin 2024/38

(21) Application number: 23875909.6

(22) Date of filing: 30.10.2023

(51) International Patent Classification (IPC):
*G06F 3/041* (2006.01)

(52) Cooperative Patent Classification (CPC):
Y02D 30/70

(86) International application number:
PCT/CN2023/127903

(87) International publication number:
WO 2024/156206 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2023 CN 202310041624

(71) Applicant: Honor Device Co., Ltd.
Shenzhen, Guangdong 518040 (CN)

(72) Inventor: HUANG, Bangbang
Guangdong 518040 (CN)

(74) Representative: Beder, Jens
Mitscherlich PartmbB
Patent- und Rechtsanwälte
Karlstraße 7
80333 München (DE)

(54) DISPLAY METHOD AND ELECTRONIC DEVICE

(57) This application discloses a display method and an electronic device. The method includes: receiving a first touch operation input by a user; if a touch scenario of the first touch operation is a hands-free operation scenario, performing drawing and rendering operations on a first image frame in a first configuration duration; performing a synthesis operation on a drawn and rendered first image frame in a second configuration duration; receiving a second touch operation input by the user; if a touch scenario of the second touch operation is a hands-required operation scenario, performing drawing and rendering operations on a second image frame in a third configuration duration in the hands-required operation scenario; and performing a synthesis operation on a drawn and rendered second image frame in a fourth configuration duration in the hands-required operation scenario. The third configuration duration is less than the first configuration duration, and/or the fourth configuration duration is less than the second configuration duration. In this way, different working durations are configured for different touch operation scenarios, to better adapt to different requirements in different application scenarios.

FIG. 8

## Description

This application claims priority to Chinese Patent Application No. 202310041624.7, filed with the China National Intellectual Property Administration on January 28, 2023 and entitled "DISPLAY METHOD AND ELECTRONIC DEVICE", which is incorporated herein by reference in its entirety.

## TECHNICAL FIELD

This application relates to the field of technologies of a display system, and in particular, to a display method and an electronic device.

## BACKGROUND

Hand-following performance is a key indicator for evaluating touch experience. A shorter hand-following response time indicates better hand-following performance. The hand-following response time is a time required for an electronic device to display a page corresponding to a touch operation on a display after receiving the touch operation of a user.

Currently, a problem of poor hand-following performance still exists in some touchscreen operation scenarios. In other words, when the electronic device displays content, a display lag problem often exists, which affects user experience.

## SUMMARY

This application provides a display method and an electronic device, to resolve a problem of poor hand-following performance.

According to a first aspect, this application provides a display method, applied to an electronic device. The method includes: receiving a first touch operation input by a user; if a touch scenario of the first touch operation is a hands-free operation scenario, performing drawing and rendering operations on a first image frame in a first configuration duration in the hands-free operation scenario in response to a received first application vertical synchronization signal; performing a synthesis operation on a drawn and rendered first image frame in a second configuration duration in the hands-free operation scenario in response to a received first synthesis vertical synchronization signal, where an interval between the first synthesis vertical synchronization signal and the first application vertical synchronization signal is the first configuration duration; performing a display operation on a synthesized first image frame in response to a received first hardware vertical synchronization signal, where an interval between the first hardware vertical synchronization signal and the first synthesis vertical synchronization signal is the second configuration duration; receiving a second touch operation input by the user; if a touch scenario of the second touch operation is a hands-required operation scenario, performing drawing and rendering operations on a second image frame in a third configuration duration in the hands-required operation scenario in response to a received second application vertical synchronization signal; performing a synthesis operation on a drawn and rendered second image frame in a fourth configuration duration in the hands-required operation scenario in response to a received second synthesis vertical synchronization signal, where an interval between the second synthesis vertical synchronization signal and the second application vertical synchronization signal is the third configuration duration; and performing a display operation on a synthesized second image frame in response to a received second hardware vertical synchronization signal, where an interval between the second hardware vertical synchronization signal and the second synthesis vertical synchronization signal is the fourth configuration duration, and the third configuration duration is less than the first configuration duration, and/or the fourth configuration duration is less than the second configuration duration.

In this way, different working durations are configured for different touch operation scenarios, to better adapt to different requirements in different application scenarios. Specifically, a configuration duration (including a drawing duration and/or a synthesis duration) may be adjusted in the hands-required operation scenario, so that a configuration duration in the hands-required operation scenario is less than a configuration duration in the hands-free operation scenario. Therefore, drawing and rendering operations, a synthesis operation, and a display operation are performed based on an adjusted configuration duration. This can reduce a touch delay, improve hand-following performance, and improve user experience.

In an implementable manner, the hands-required operation scenario includes a hands-required sliding operation scenario and a hands-required pressing operation scenario.

In an implementable manner, the method further includes: if the touch scenario of the first touch operation is the hands-free operation scenario, determining first configuration information corresponding to the hands-free operation scenario, where the first configuration information includes the first configuration duration and the second configuration duration; and if the touch scenario of the second touch operation is the hands-required operation scenario, determining second configuration information corresponding to the hands-required operation scenario, where the second configuration information includes the third configuration duration and the fourth configuration duration.

In an implementable manner, an interval between the second application vertical synchronization signal and a third application vertical synchronization signal is a first duration. An interval between the second application vertical synchronization signal and a fourth application vertical synchronization signal is a second duration. The third application vertical synchronization signal is a previous application vertical synchronization signal of the second application vertical synchronization signal. The fourth application vertical synchronization signal is a next application vertical synchronization signal of the second application vertical synchronization signal. An interval between the second synthesis vertical synchronization signal and a third synthesis vertical synchronization signal is a third duration. An interval between the second synthesis vertical synchronization signal and a fourth synthesis vertical synchronization signal is a fourth duration. The third synthesis vertical synchronization signal is a previous synthesis vertical synchronization signal of the second synthesis vertical synchronization signal. The fourth synthesis vertical synchronization signal is a next synthesis vertical synchronization signal of the second synthesis vertical synchronization signal. The first duration is different from the second duration, and/or the third duration is different from the fourth duration.

In this way, the configuration duration can be modified through adjusting an offset of an application vertical signal and/or a synthesis vertical signal.

In an implementable manner, if the touch scenario of the second touch operation is the hands-required operation scenario, the method further includes: generating the second application vertical synchronization signal based on the second hardware vertical synchronization signal and a first signal offset in the hands-required operation scenario; and generating the second synthesis vertical synchronization signal based on the second hardware vertical synchronization signal and a second signal offset in the hands-required operation scenario.

In an implementable manner, the method further includes: obtaining a historical drawing duration for performing the drawing and rendering operations and a historical synthesis duration for performing the synthesis operation; and determining the third configuration duration and the fourth configuration duration based on the historical drawing duration and the historical synthesis duration. The third configuration duration is greater than or equal to a maximum drawing duration in the historical drawing duration. The fourth configuration duration is greater than or equal to a maximum synthesis duration in the historical synthesis duration.

In this way, the third configuration duration and the fourth configuration duration are determined based on historical statistical data, so that it can be better ensured that the drawing and rendering operations, the synthesis operation, and the display operation are completed in time in the third configuration duration and the fourth configuration duration.

In an implementable manner, the method further includes: determining a hand-following performance level corresponding to the hands-required operation scenario; and determining the third configuration duration and the fourth configuration duration based on the hand-following performance level, where different hand-following performance levels correspond to different configuration durations.

In this way, a hands-required sliding operation is further subdivided in this application, so that different hands-required sliding operation scenarios correspond to different configuration durations. Therefore, hand-following performance requirements in different sliding operation scenarios can be better adapted, to further improve user experience.

In an implementable manner, the hands-required operation scenario includes a finger hands-required operation scenario and a stylus hands-required operation scenario. A hand-following performance level corresponding to the stylus hands-required operation scenario is higher than a hand-following performance level corresponding to the finger hands-required operation scenario. The third configuration duration corresponding to the stylus hands-required operation scenario is less than the third configuration duration corresponding to the finger hands-required operation scenario, and/or the fourth configuration duration corresponding to the stylus hands-required operation scenario is less than the fourth configuration duration corresponding to the finger hands-required operation scenario.

In an implementable manner, if the touch scenario of the second touch operation is the hands-required operation scenario, the method further includes: determining a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, where the first preset display time is a preset time at which a display operation is performed on the first buffered frame, and the second preset display time is a preset display time corresponding to a second synthesis vertical synchronization signal; when the first preset display time is earlier than the second preset display time, determining a third preset display time corresponding to a second buffered frame, where the third preset display time is a preset time at which a display operation is performed on the second buffered frame, and the second buffered frame is a buffered frame that is located after the first buffered frame in the buffer queue; and when the third preset display time is the same as the second preset display time, or the third preset display time is earlier than the second preset display time, discarding the first buffered frame, and performing a synthesis operation on the second buffered frame.

In this case, the first buffered frame may be discarded, and the second buffered frame may be used to participate in a synthesis operation, so that an image is displayed on a display as soon as possible and the user does not feel a lag.

In an implementable manner, the method further includes: when the third preset display time is later than the second preset display time, and it is determined that a time interval between the currently received second synthesis vertical synchronization signal and a previous second synthesis vertical synchronization signal is less than one Vsync periodicity, or a time interval between a previous second application vertical synchronization signal and a second application vertical synchronization signal used to trigger drawing and rendering operations on the second buffered frame is less than one Vsync periodicity, discarding the first buffered frame, and performing the synthesis operation on the second buffered frame.

In this way, accumulation of buffered frames due to a misjudgment of a buffer status can be avoided.

In an implementable manner, the method further includes: when the first preset display time is the same as the second preset display time, or the third preset display time is later than the second preset display time, performing the synthesis operation on the first buffered frame.

In an implementable manner, the frame discarding condition includes that a timestamp attribute corresponding to the first preset display time of the first buffered frame is an automatic timestamp, a current refresh rate is greater than 60 Hz, and a time interval from a previous discarded image frame in the buffer queue is greater than a preset time interval threshold.

According to a second aspect, this application provides another display method, applied to an electronic device. The method includes: receiving a second touch operation input by a user; if a touch scenario of the second touch operation is a hands-required operation scenario, determining a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, where the first preset display time is a preset time at which a display operation is performed on the first buffered frame, and the second preset display time is a preset display time corresponding to a second synthesis vertical synchronization signal; when the first preset display time is earlier than the second preset display time, determining a third preset display time corresponding to a second buffered frame, where the third preset display time is a preset time at which a display operation is performed on the second buffered frame, and the second buffered frame is a buffered frame that is located after the first buffered frame in the buffer queue; and when the third preset display time is the same as the second preset display time, or the third preset display time is earlier than the second preset display time, discarding the first buffered frame, and performing a synthesis operation on the second buffered frame.

In this case, the first buffered frame may be discarded, and the second buffered frame may be used to participate in a synthesis operation, so that an image is displayed on a display as soon as possible and the user does not feel a lag.

In an implementable manner, the method further includes: when the third preset display time is later than the second preset display time, and it is determined that a time interval between the currently received second synthesis vertical synchronization signal and a previous second synthesis vertical synchronization signal is less than one Vsync periodicity, or a time interval between a previous second application vertical synchronization signal and a second application vertical synchronization signal used to trigger drawing and rendering operations on the second buffered frame is less than one Vsync periodicity, discarding the first buffered frame, and performing the synthesis operation on the second buffered frame.

In this way, accumulation of buffered frames due to a misjudgment of a buffer status can be avoided.

In an implementable manner, the method further includes: when the first preset display time is the same as the second preset display time, or the third preset display time is later than the second preset display time, performing the synthesis operation on the first buffered frame.

In an implementable manner, the frame discarding condition includes that a timestamp attribute corresponding to the first preset display time of the first buffered frame is an automatic timestamp, a current refresh rate is greater than 60 Hz, and a time interval from a previous discarded image frame in the buffer queue is greater than a preset time interval threshold.

According to a third aspect, this application provides a display apparatus. The display apparatus may include: a first receiving module, configured to receive a first touch operation input by a user; a first drawing and rendering module, configured to: if a touch scenario of the first touch operation is a hands-free operation scenario, perform drawing and rendering operations on a first image frame in a first configuration duration in the hands-free operation scenario in response to a received first application vertical synchronization signal; a first synthesis module, configured to perform a synthesis operation on a drawn and rendered first image frame in a second configuration duration in the hands-free operation scenario in response to a received first synthesis vertical synchronization signal, where an interval between the first synthesis vertical synchronization signal and the first application vertical synchronization signal is the first configuration duration; a first display module, configured to perform a display operation on a synthesized first image frame in response to a received first hardware vertical synchronization signal, where an interval between the first hardware vertical synchronization signal and the first synthesis vertical synchronization signal is the second configuration duration; a second receiving module, configured to receive a second touch operation input by the user; a second drawing and rendering module, configured to: if a touch scenario of the second touch operation is a hands-required operation scenario, perform drawing and rendering operations on a second image frame in a third configuration duration in the hands-required operation scenario in response to a received second application vertical synchronization signal; a second synthesis module, configured to perform a synthesis operation on a drawn and rendered second image frame in a fourth configuration duration in the hands-required operation scenario in response to a received second synthesis vertical synchronization signal, where an interval between the second synthesis vertical synchronization signal and the second application vertical synchronization signal is the third configuration duration; and a second display module, configured to perform a display operation on a synthesized second image frame in response to a received second hardware vertical synchronization signal, where an interval between the second hardware vertical synchronization signal and the second synthesis vertical synchronization signal is the fourth configuration duration, and the third configuration duration is less than the first configuration duration, and/or the fourth configuration duration is less than the second configuration duration.

The display apparatus provided in the third aspect can be configured to perform the display method in any implementation of the first aspect.

According to a fourth aspect, this application provides another display apparatus. The apparatus includes: a sixth determining module, configured to determine a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, where the first preset display time is a preset time at which a display operation is performed on the first buffered frame, and the second preset display time is a preset display time corresponding to a second synthesis vertical synchronization signal; a seventh determining module, configured to: when the first preset display time is earlier than the second preset display time, determine a third preset display time corresponding to a second buffered frame, where the third preset display time is a preset time at which a display operation is performed on the second buffered frame, and the second buffered frame is a buffered frame that is located after the first buffered frame in the buffer queue; and a second synthesis module, configured to: when the third preset display time is the same as the second preset display time, or the third preset display time is earlier than the second preset display time, discard the first buffered frame, and perform a synthesis operation on the second buffered frame.

The display apparatus provided in the fourth aspect can be configured to perform the display method in any implementation of the second aspect.

According to a fifth aspect, this application provides an electronic device, including a memory and a processor. The memory is coupled to the processor. The memory is configured to store computer program code. The computer program code includes computer instructions. When the processor executes the computer instructions, the electronic device is enabled to perform the method in either one of the first aspect or the second aspect.

According to a sixth aspect, this application provides a computer storage medium. The computer storage medium stores computer programs or instructions. When the computer programs or the instructions are executed, the method in either one of the first aspect or the second aspect is performed.

According to a seventh aspect, this application provides a computer program product, including computer readable code. When the computer readable code is run on an electronic device, the electronic device is enabled to perform the method in either one of the first aspect or the second aspect.

It should be understood that, for beneficial effects of the second aspect to the seventh aspect, reference may be made to the related descriptions in the first aspect. Details are not described herein again.

**BRIEF DESCRIPTION OF DRAWINGS**

FIG. 1 is a frame diagram of an image display process according to an embodiment of this application;
FIG. 2 is a schematic diagram of a touch delay according to an embodiment of this application;
FIG. 3 is a schematic diagram of an image display process in a tapping operation scenario according to an embodiment of this application;
FIG. 4 is a schematic diagram of an image display process in another tapping operation scenario according to an embodiment of this application;
FIG. 5 is a schematic diagram of another image display process according to an embodiment of this application;
FIG. 6 is a schematic diagram of a structure of an electronic device according to an embodiment of this application;
FIG. 7 is a block diagram of a software structure of an electronic device according to an embodiment of this application;
FIG. 8 is a flowchart of a display method according to Embodiment 1 of this application;
FIG. 9A and FIG. 9B are a diagram of module interaction of a display method according to Embodiment 1 of this application;
FIG. 10 is a diagram of a scenario in which a user performs a sliding operation on a display according to an embodiment of this application;
FIG. 11 is a flowchart of a display method in a hands-required sliding operation scenario according to Embodiment 1 of this application;
FIG. 12 is a flowchart of a display method in another hands-required sliding operation scenario according to Embodiment 1 of this application;

FIG. 13 is a schematic diagram of a display process according to an embodiment of this application;

FIG. 14 is a statistical diagram of actual working durations of drawing and rendering operations and a synthesis operation according to an embodiment of this application;

FIG. 15 is a flowchart of a display method according to Embodiment 2 of this application;

FIG. 16 is a schematic diagram of an image display process according to Embodiment 2 of this application;

FIG. 17 is a schematic diagram of another image display process according to Embodiment 2 of this application;

FIG. 18 is a schematic diagram of a structure of a display apparatus according to embodiment of this application; and

FIG. 19 is a schematic diagram of a structure of another display apparatus according to embodiment of this application.

## DESCRIPTION OF EMBODIMENTS

The following clearly and completely describes the technical solutions in embodiments of this application with reference to the accompanying drawings in embodiments of this application. Clearly, the described embodiments are merely some rather than all of embodiments of this application. All other embodiments obtained by a person skilled in the art based on embodiments of this application without creative efforts shall fall within the protection scope of this application.

The following describes the technical solutions of this application with reference to the accompanying drawings.

In description of this application, unless otherwise stated, "and/or" describes only an association relationship for describing associated objects and represents that three relationships may exist. For example, A and/or B may represent the following three cases: Only A exists, both A and B exist, and only B exists. In addition, "at least one" means one or more, "at least two" means two or more, and "a plurality of" also means two or more. Terms such as "first" and "second" do not limit a quantity or an execution order, and terms such as "first" and "second" do not indicate a definite difference.

It should be noted that, in this application, words such as "for example" or "such as" are used to indicate an example, illustration, or description. Any embodiment or design solution described as "example" or "for example" in this application should not be construed as being preferred or advantageous over other embodiments or design solutions. Exactly, use of the word "example", "for example", or the like is intended to present a related concept in a specific manner.

To facilitate understanding of the technical solutions in this application, the following describes examples of application scenarios of the technical solutions provided in this application.

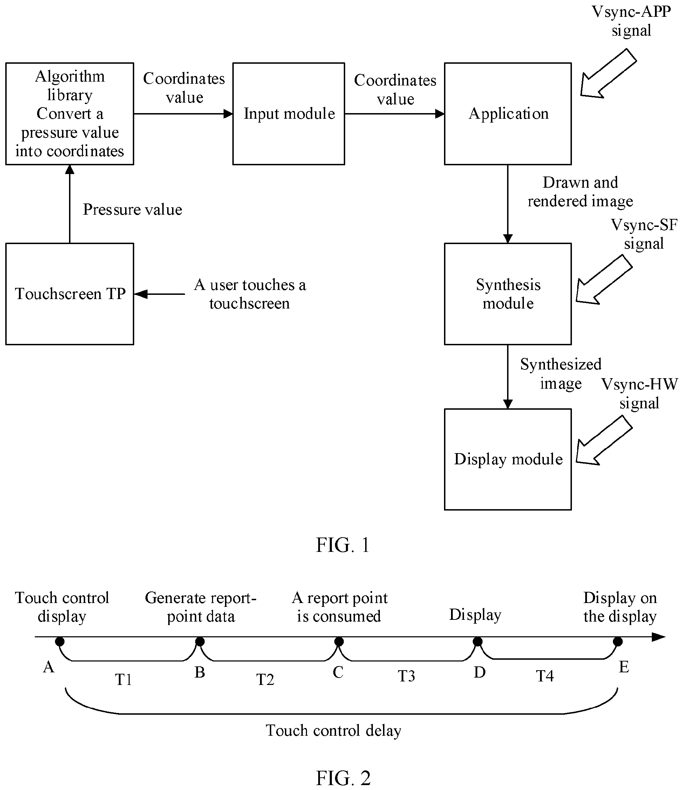

As shown in FIG. 1, after a user touches a touchscreen TP, a pressure sensor in the touchscreen TP detects a pressure value, and uploads the pressure value to an algorithm library. The algorithm library converts the pressure value into a coordinates value (also referred to as report point data), and then sends the coordinates value to an Input module. The Input module may perform resampling processing on the coordinates value to obtain the resampled coordinates value. When an application receives a Vsync-APP signal (also referred to as an application vertical synchronization signal), the application obtains the resampled coordinates value to perform image drawing and rendering processing. When a Vsync-SF signal (also referred to as a synthesis vertical synchronization signal) is received, a synthesis module performs synthesis processing on a drawn and rendered image. When a Vsync-HW signal (also referred to as a hardware vertical synchronization signal) is received, the synthesis module sends a synthesized image to a display LCD for display.

After an electronic device receives a touch operation input by the user, a time required for displaying a page corresponding to the touch operation on the display is referred to as a hand-following response time, and also referred to as a touch delay.

With reference to FIG. 1 and FIG. 2, the touch delay mainly includes the following four parts of the delay: A first part of the delay T1 represents a time consumed from touching the touchscreen TP (a point A in FIG. 2) by the user to generating the report point data (a point B in FIG. 2). A second part of the delay T2 represents a time consumed for transmitting the report point data to an input (input) subsystem and waiting for a report point to be consumed (a point C in FIG. 2). A third part of the delay T3 represents a time consumed for retrieving the report point data and performing drawing and rendering operations, a synthesis operation, and a display operation (a point D in FIG. 2). A fourth part of the delay T4 represents a time consumed for displaying a synthesized image (a point E in FIG. 2) on the display.

FIG. 2 shows an entire procedure from touching the display by the user to displaying an image corresponding to the touch operation on the display. It should be understood that hand-following performance can be improved through optimizing any one of the foregoing four parts of the delay. The method provided in embodiments of this application aims to optimize the third part of the delay T3.

The following further describes a processing procedure corresponding to the third part of the delay T3.

For ease of understanding, related concepts in the processing procedure corresponding to the third part of the delay T3 are first described.

1. A frame indicates a smallest unit of a single image in interface display. One frame may be understood as one still image. Displaying a plurality of consecutive frames rapidly and continuously can create an illusion that an object moves. A frame rate indicates a quantity of frames of images refreshed in 1 second, and may also be understood as a quantity of times a graphics processing unit in the electronic device refreshes an image per second. A high frame rate can result in a smoother and more vivid animation. More frames per second indicate a smoother displayed action.

It should be noted that processes such as drawing, rendering, and synthesis usually need to be performed before a frame is displayed on an interface.

2. Frame drawing indicates image drawing for a display interface. The display interface may include one or more views. Each view may be drawn by a visual control of a view system. Each view includes sub-views. One sub-view corresponds to one part in the view. For example, one sub-view of an image view corresponds to one symbol in the image view.

3. Frame rendering is coloring or adding a 3D effect on a drawn view. For example, the 3D effect may be a lighting effect, a shadow effect, a texture effect, and the like.

4. Frame synthesis is a process of synthesizing a plurality of foregoing one or more rendered views into a display interface.

5. Display is an operation of sending a synthesized view to a display module (such as a display driver chip DDIC).

The following describes an interface display process corresponding to the third part of the delay T3.

To improve fluency of display and reduce a phenomenon such as a display lag, the electronic device generally performs display based on a vertical synchronization (Vertical Synchronization, Vsync) signal, to synchronize processes such as drawing and rendering, synthesis, and display of an image.

The Vsync signal is a periodic signal. A Vsync signal periodicity may be set based on a screen refresh rate. For example, when the screen refresh rate is 60 Hz, the Vsync signal periodicity may be 16.6 ms. In other words, the electronic device generates a control signal every 16.6 ms to trigger the Vsync signal periodically. For another example, when the screen refresh rate is 90 Hz, the Vsync signal periodicity may be 11.1 ms. In other words, the electronic device generates a control signal every 11.1 ms to trigger the Vsync signal periodically.

It should be noted that Vsync signals are classified into hardware Vsync signals (also referred to as Vsync-HW signals) and software Vsync signals. The Vsync-HW signal is generated by a screen LCD. The synthesis module converts the Vsync-HW signal into software signals: respectively a Vsync-APP signal and a Vsync-SF signal. The Vsync-APP signal is used to trigger execution of drawing and rendering operations. The Vsync-SF signal is used to trigger execution of a synthesis operation. The Vsync-HW signal is used to trigger execution of a display operation.

It should be further noted that, currently, a system in the electronic device separately configures, in advance, an enough drawing duration for an application and an enough synthesis duration for the synthesis module to perform drawing and rendering operations and a synthesis operation. Specifically, when the synthesis module converts the Vsync-HW signal into the software signals, offsets of the Vsync-APP signal and the Vsync-SF signal may be adjusted, so that the Vsync-APP signal, the Vsync-SF signal, and the Vsync-HW signal are sent in each Vsync periodicity in a staggered manner. In this way, the drawing and rendering operations and the synthesis operation meet the respective configuration durations.

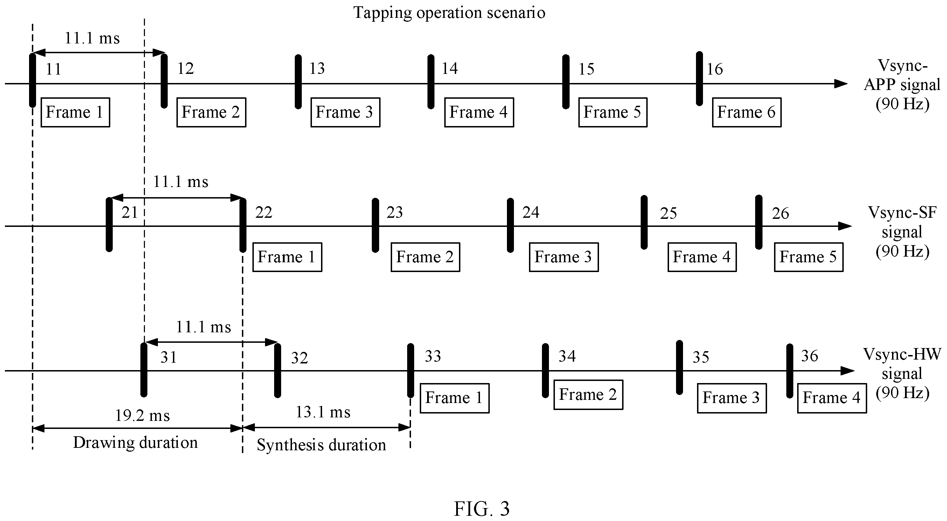

For example, as shown in FIG. 3, when the synthesis module converts the Vsync-HW signal into the software signals, an offset of the Vsync-APP signal is set to 1 ms, and an offset of the Vsync-SF signal is set to -2 ms. In this way, a sending rhythm of the Vsync-APP signal, the Vsync-SF signal, and the Vsync-HW signal is shown in FIG. 3.

Currently, a method for calculating, based on the offset of the Vsync-APP signal and the offset of the Vsync-SF signal, the drawing duration configured for the drawing and rendering operations and the synthesis duration configured for the synthesis operation is as follows:

The drawing duration Tapp is calculated according to the following first relational expression, and the synthesis duration Tsf is calculated according to the following second relational expression.

The first relational expression is:

$$Tapp = Tte + (sfOffset - appOffset).$$

The second relational expression is:

$$Tsf = Tte - sfOffset.$$

Herein, Tapp represents the drawing duration configured for the drawing and rendering operations, Tsf represents the synthesis duration configured for the synthesis operation, Tte represents the Vsync periodicity, appOffset represents the offset of the Vsync-APP signal, and sfOffset represents the offset of the Vsync-SF signal.

It should be noted that, in the existing calculation method, if Tapp obtained through calculation according to the following first relational expression is less than Tte, Tte is added based on Tapp obtained through calculation.

For example, appOffset = 1ms, sf Offset = -2 ms, and Tte = 11.1 ms. It may be learned according to the first relational expression that Tapp = 11.1 + (-2 - 1) = 8.1 ms, Tsf = 11.1 - (-2) = 13.1 ms. Because Tapp = 8.1 ms < 11.1 ms, Tapp = 8.1 + 11.1 = 19.2 ms.

In this way, as shown in FIG. 3, in response to a Vsync-APP signal 11, an application performs drawing and rendering operations on a frame 1. A drawn and rendered frame 1 can be consumed only after a Vsync-SF signal (that is, a Vsync-SF signal 22 in FIG. 3) at an interval of 19.2 ms with the Vsync-APP signal 11. In other words, in response to the Vsync-SF signal 22, the synthesis module extracts the drawn and rendered frame 1 for consumption, and performs a synthesis operation. Similarly, a synthesized frame 1 can be consumed only after a Vsync-HW signal (that is, a Vsync-HW signal 33 in FIG. 3) at an interval of 13.1 ms with the Vsync-SF signal 22. In other words, in response to the Vsync-HW signal 33, the display module performs a display operation on the synthesized frame 1, and refreshes the frame 1 to the screen. In this way, about three Vsync periodicities are required from drawing and rendering the frame 1 to sending the frame 1 to the display module for display.

Currently, for any touch operation scenario of the user, the electronic device performs the drawing and rendering operations, the synthesis operation, and the display operation by using the corresponding drawing duration and the corresponding synthesis duration that are preset in the foregoing method. In this way, there is the following problem: The preset configuration duration may meet an image refresh requirement in some application scenarios (for example, a tapping operation scenario). However, for a scenario in which hand-following performance is required, for example, a hands-required sliding scenario such as dragging a page, the drawing and rendering operations, the synthesis operation, and the display operation are still performed based on the configuration duration. A problem of poor hand-following performance may occur. For example, as shown in FIG. 3, about three Vsync periodicities are required for drawing and rendering a frame image to sending a drawn and rendered frame image to the display module for display. Image display efficiency is poor, a touch response is slow, and hand-following performance is poor. Therefore, application experience of the user in a hands-required sliding scenario is seriously affected.

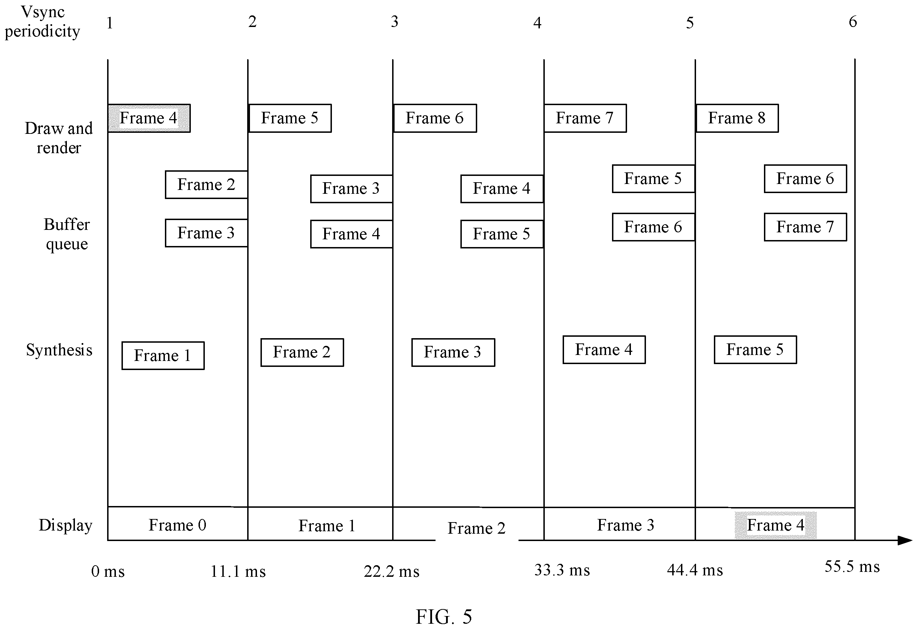

As shown in FIG. 5, a drawn and rendered image frame may be buffered in a buffer queue of the synthesis module, to be consumed by the synthesis module. After receiving the Vsync-SF signal, the synthesis module sequentially extracts buffered frames from the buffer queue to perform the synthesis operation.

In some abnormal cases, for example, drawing and rendering of a frame 1 is not completed in a first Vsync periodicity. In this way, in a second Vsync periodicity, two buffered frames may be accumulated in a buffer queue. When there are a plurality of buffered frames in the buffer queue, the synthesis module extracts the buffered frames from the buffer queue according to a queuing order of the buffered frames to perform a synthesis operation. For example, in the first Vsync periodicity, the application starts drawing and rendering of a frame 4. The buffer queue includes a drawn and rendered frame 2 and a drawn and rendered frame 3. In the second Vsync periodicity, the application starts drawing and rendering of a frame 5. The synthesis module extracts the frame 2 in a first position in the buffer queue to perform a synthesis operation. The buffer queue includes the drawn and rendered frame 3 and the drawn and rendered frame 4. By analogy, the frame 4 is displayed on a screen in a fifth Vsync periodicity. It can be learned that, in comparison with a case in which there is no buffered frame in the buffer queue, an image is delayed for two Vsync periodicities and then displayed in a case in which there are two buffered frames in the buffer queue.

Therefore, a quantity of buffered frames accumulated in the buffer queue also affects the third part of the delay T3.

In conclusion, the third part of the delay T3 may be expressed by using the following third relational expression. The third relational expression is: T3 = T configuration + M * Tte.

Herein, T configuration represents a total configuration duration from starting drawing and rendering to the display operation, M represents the quantity of buffered frames accumulated in the buffer queue, and M is a positive integer greater than or equal to 0.

To optimize the third part of the delay T3, an embodiment of this application provides a display method. In the display method, the configuration duration may be optimized, and/or the quantity of buffered frames accumulated in the buffer queue may be reduced, to reduce the third part of the delay T3 and improve hand-following performance.

The display method provided in this embodiment of this application may be applied to any electronic device with a touchscreen, for example, a mobile phone, a watch, or a tablet computer.

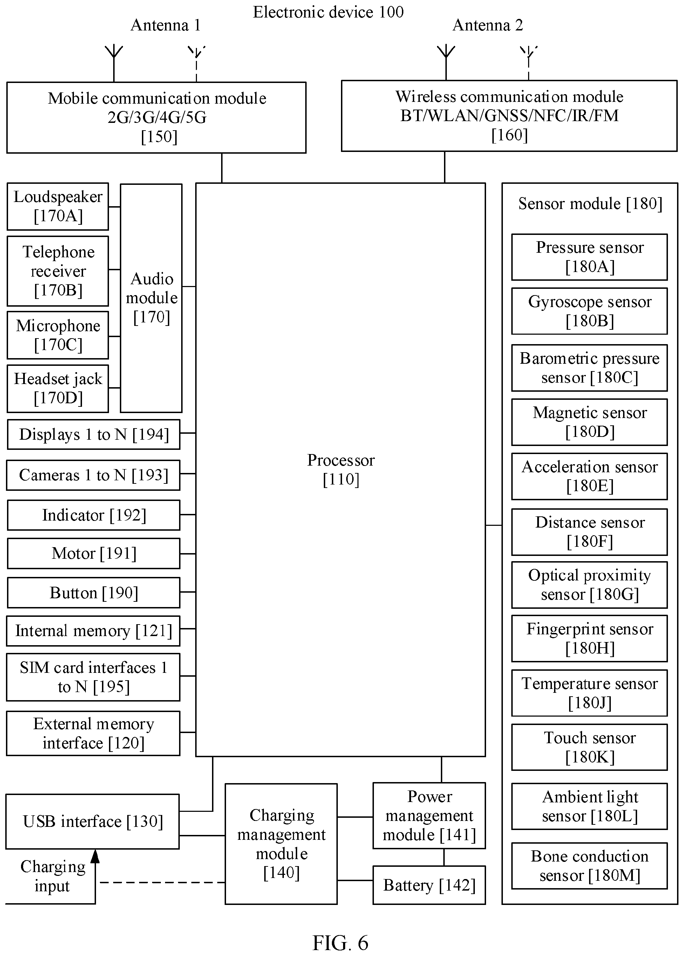

For example, a specific structure of the electronic device, refer to a schematic diagram of a structure of an electronic device shown in FIG. 6.

As shown in FIG. 6, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal based on instruction operation code and a time sequence signal, to control instruction fetching and instruction execution.

The processor 110 may be further provided with a memory configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derial clock line, SCL). In some embodiments, the processor 110 may include a plurality of I2C buses. The processor 110 may be coupled to the touch sensor 180K, a charger, a flash light, the camera 193, and the like by using different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be used for audio communication. In some embodiments, the processor 110 may include a plurality of I2S buses. The processor 110 may be coupled to the audio module 170 by the I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and encode an analog signal. In some embodiments, the audio module 170 and the wireless communication module 160 may be coupled through the PCM bus interface. In some embodiments, the audio module 170 may also transfer an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using the Bluetooth headset.

The MIPI may be configured to connect the processor 110 to a peripheral device such as the display 194 or the camera 193. The MIPI interface include a camera serial interface (camera serial interface, CSI), a display serial interface (display serial interface, DSI), and the like. In some embodiments, the processor 110 and the camera 193 communicate with each other through the CSI interface, to implement a photographing function of the electronic device 100. The processor 110 communicates with the display 194 through a DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 and the camera 193, the display 194, the wireless communication module 160, the audio module 170, the sensor module 180, or the like. The GPIO interface may be alternatively configured as an I2C interface, an I2S interface, a UART interface, a MIPI, or the like.

The USB interface 130 is an interface that complies with the USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play audio through the headset. The interface may be alternatively configured to connect to another electronic device, for example, an AR device.

It may be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a state of battery health (electric leakage and impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover a single communication frequency band or a plurality of communication frequency bands. Different antennas may be multiplexed to improve utilization of the antennas. For example, the antenna 1 may be multiplexed as a diversity antenna in a wireless local area network. In some other embodiments, the antennas may be used with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator sends the low-frequency baseband signal obtained through demodulation to the baseband processor for processing. The low-frequency baseband signal is processed by the baseband processor and then sent to the application processor. The application processor outputs a sound signal through an audio device (which is not limited to the loudspeaker 170A, the telephone receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric calculation and graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a MicrooLed, a quantum dot light emitting diode (quantum dot light emitting diodes, QLED), or the like. In some embodiments, the electronic device 100 may include 1 or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through a lens and is projected onto a photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include 1 or N cameras 193, where N is a positive integer greater than 1.

The digital signal processor is configured to process a digital signal. In addition to a digital image signal, the digital signal processor may further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. Therefore, the electronic device 100 may play or record videos in a plurality of encoding formats, such as moving picture experts group (moving picture experts group, MPEG)1, MPEG2, MPEG3, and MPEG4.

The NPU is a neural-network (neural-network, NN) computing processor, and simulates a structure of a biological neural network, for example, a mode of transfer between neurons in human brain, to quickly process input information, and can further continuously perform self-learning. Applications such as intelligent cognition of the electronic device 100, for example, image recognition, face recognition, speech recognition, and text understanding, may be implemented by using the NPU.

An external memory interface 120 may be configured to connect to an external memory card such as a Micro SD card, to expand a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The computer-executable program code includes instructions. The internal memory 121 may include a program storage area and a data storage area. The program storage area may store an operating system, an application required by at least one function (such as a sound playback function and an image playback function), and the like. The data storage area may store data (such as audio data and an address book) and the like created when the electronic device 100 is used. In addition, the internal memory 121 may include a high-speed random access memory, and may further include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to execute functional applications and data processing of the electronic device 100.

The electronic device 100 may implement an audio function through the audio module 170, the loudspeaker 170A, the telephone receiver 170B, the microphone 170C, the headset jack 170D, the application processor, and the like. The audio function includes, for example, music playing and sound recording.

The audio module 170 is configured to convert digital audio information into an analog audio signal for output, and is also configured to convert an analog audio input into a digital audio signal. The audio module 170 may be further configured to encode and decode the audio signal. In some embodiments, the audio module 170 may be disposed in the processor 110, or some functional modules in the audio module 170 are disposed in the processor 110.

The loudspeaker 170A, also referred to as a "horn", is configured to convert an electrical audio signal into a sound signal. The electronic device 100 may be used to listen to music or answer a hands-free call through the loudspeaker 170A. A plurality of loudspeakers 170A may be disposed in the electronic device 100. For example, one loudspeaker 170A may be disposed at the top of the electronic device 100, and one loudspeaker 170A may be disposed at the bottom of the electronic device.

The telephone receiver 170B, also referred to as an "earpiece", is configured to convert an audio electrical signal into a sound signal. When the electronic device 100 is configured to answer a call or receive voice information, the telephone receiver 170B may be put close to a human ear to receive a voice. In some embodiments, the loudspeaker 170A and the telephone receiver 170B may be alternatively disposed as one component. This is not limited in this application.

The microphone 170C, also referred to as a "voice tube" or a "mike", is configured to convert a sound signal into an electrical signal. When making a call or sending voice information, a user may make a sound by approaching a mouth to the microphone 170C, to input a sound signal to the microphone 170C. The electronic device 100 may be provided with at least one microphone 170C. In some other embodiments, the electronic device 100 may be provided with two microphones 170C, and may further implement a noise reduction function in addition to collecting a sound signal. In some other embodiments, three, four, or more microphones 170C may be alternatively disposed in the electronic device 100, to collect a sound signal, reduce noise, further identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunication industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects touch operation intensity through the pressure sensor 180A. The electronic device 100 may further calculate a touch position based on a detected signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of electronic device 100 around three axes (that is, x, y, and z axes) may be determined by using the gyroscope sensor 180B. The gyroscope sensor 180B may be used for image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in navigation and a motion sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip based on the magnetic sensor 180D. Further, features such as automatic unlocking of the flip cover are set based on the detected opening and closing states of the leather cover or opening and closing states of the flip cover.

The acceleration sensor 180E may detect magnitudes of acceleration in various directions (usually on three axes) of the electronic device 100, may detect a magnitude and a direction of gravity when the electronic device 100 is still, and may be further configured to recognize a posture of the electronic device, and be used in applications such as screen switching between a landscape mode and a portrait mode, and a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may be further configured to automatically unlock and lock the screen in a leather cover mode and a pocket mode.

The ambient light sensor 180L is configured to sense ambient light brightness. The electronic device 100 may adaptively adjust brightness of the display 194 based on the perceived ambient light brightness. The ambient light sensor 180L may be further configured to automatically adjust white balance during photographing. The ambient light sensor 180L may also cooperate with the optical proximity sensor 180G to detect whether the electronic device 100 is in a pocket to prevent a false touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142 to avoid abnormal shutdown of the electronic device 100 caused by a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display 194. The touch sensor 180K and the display 194 constitute a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided by using the display 194. In some other embodiments, the touch sensor 180K may be alternatively disposed on a surface of the electronic device 100 at a position different from that of the display 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively contact a human pulse to receive a blood pressure beating signal. In some embodiments, the bone conduction sensor 180M may be alternatively disposed in the headset to be combined into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate measurement function.

The button 190 includes a power on/off button, a volume button, and the like. The button 190 may be a mechanical button, or may be a touch key. The electronic device 100 may receive a button input and generate a button signal input related to user settings and function control of the electronic device 100.

The motor 191 may generate a vibration alert. The motor 191 may be configured to provide a vibration prompt for an incoming call, and may be further configured to provide vibration feedback for a touch. For example, touch operations performed on different applications (for example, photographing and audio playback) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195 to implement contact with and separation from the electronic device 100. The electronic device 100 may support 1 or N SIM card interfaces, where N is a positive integer greater than 1. The SIM card interface 195 can support a Nano SIM card, a Micro SIM card, a SIM card, and the like. A plurality of cards may be inserted into a same SIM card interface 195 at the same time. The plurality of cards may be of a same type or may be of different types. The SIM card interface 195 may be compatible with different types of SIM cards. The SIM card interface 195 is also compatible with an external storage card. The electronic device 100 interacts with a network through a SIM card, to implement functions such as a call and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a hierarchical architecture, an event-driven architecture, a micronucleus architecture, a microservice architecture, or a cloud architecture. In embodiments of the present invention, an Android system with a layered architecture is used as an example to describe a software structure of the electronic device 100.

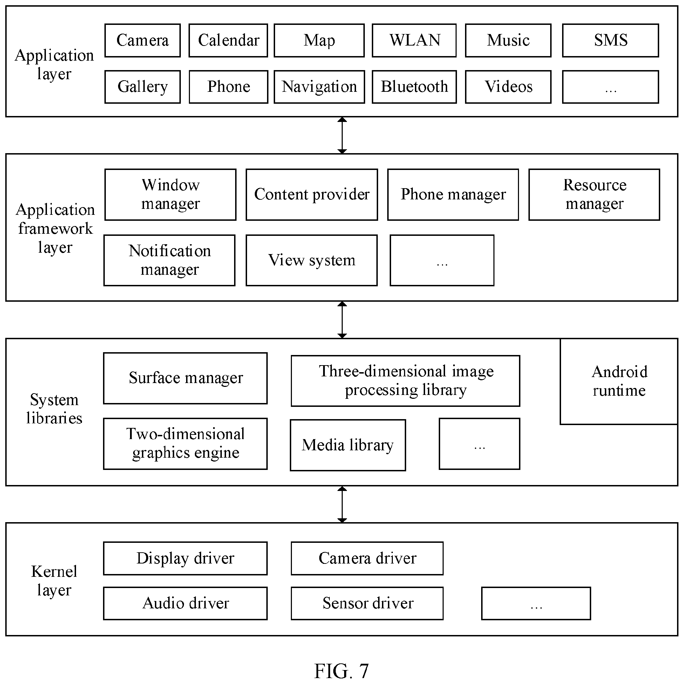

FIG. 7 is a block diagram of a software structure of an electronic device 100 according to an embodiment of this application.

In a layered architecture, software is divided into several layers, and each layer has a clear role and task. Layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 7, the application packages may include applications such as Camera, Gallery, Calendar, Phone, Map, Navigation, WLAN, Bluetooth, Music, Videos, and SMS.

The application framework layer provides an application programming interface (application programming interface, API) and a programming framework for the application at the application layer. The application framework layer includes some predefined functions.

As shown in FIG. 7, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessible to an application. The data may include a video, an image, audio, calls that are made and answered, a browsing history and bookmarks, a phone book, and the like.

The view system includes a visual control such as a control for text display or a control for image display. The view system may be configured to construct an application. A display interface may include one or more views. For example, a display interface including an SMS message notification icon may include a text display view and an image display view.

The phone manager is configured to provide a communication function of the electronic device 100, for example, call status management (including getting through, hang-up, and the like).

The resource manager provides the application with various resources such as a localized character string, an icon, an image, a layout file, and a video file.

The notification manager enables an application to display notification information in a status bar, and may be configured to convey a notification message. The notification manager may automatically disappear after a short pause without a user interaction. For example, the notification manager is configured to notify download completion, provide a message notification, and the like. The notification manager may be alternatively a notification that appears in a top status bar of the system in a form of a graph or a scroll bar text, for example, a notification of an application run in the background, or may be a notification that appears on the screen in a form of a dialog window. For example, text information is prompted in the status bar, an alert sound is played, the electronic device vibrates, or the indicator light blinks.

Android Runtime includes a kernel library and a virtual machine. Android runtime is responsible for scheduling and management of the Android system.

The kernel library includes two parts: One part is a functional function that needs to be invoked by a java language, and the other part is a kernel library of Android.

The application layer and the application framework layer are run on the virtual machine. The virtual machine executes java files of the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide fusion of 2D and 3D layers for a plurality of applications.

The media library supports playback and recording of a plurality of commonly used audio and video formats, a static image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine of 2D drawing.

The kernel layer is a layer between hardware and software. The kernel layer includes at least a display driver, a camera driver, an audio driver, and a sensor driver.

The following describes the display method provided in this application.

**Embodiment 1**

In the display method provided in Embodiment 1 of this application, the configuration duration is optimized to reduce the third part of the delay T3, thereby improving hand-following performance.

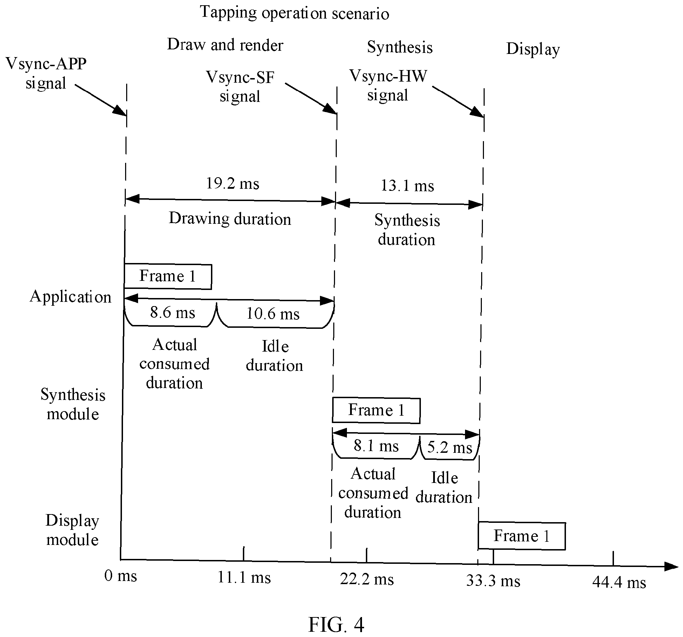

FIG. 4 is a schematic diagram of a display process corresponding to FIG. 3. As shown in FIG. 4, the applicant finds that in an actual execution process, in most cases, there is a large quantity of idle durations in a drawing duration configured for drawing and rendering operations. For example, although the drawing duration configured for the drawing and rendering operations is 19.2 ms, an actual duration consumed by drawing and rendering one frame of image needs only 8.6 ms, and there is an idle duration of 10.6 ms. Similarly, although a synthesis duration configured for a synthesis operation is 13.1 ms, an actual duration consumed by synthesizing one frame of image needs only 8.1 ms, and there is an idle duration of 5.2 ms.

In view of this, in the display method provided in Embodiment 1 of this application, to improve hand-following performance in a hands-required sliding scenario, a working duration configured for the drawing and rendering operations and the synthesis operation may be shortened after it is determined that a current scenario is a hands-required operation scenario, to accelerate a touch response and refresh an image to a screen as soon as possible.

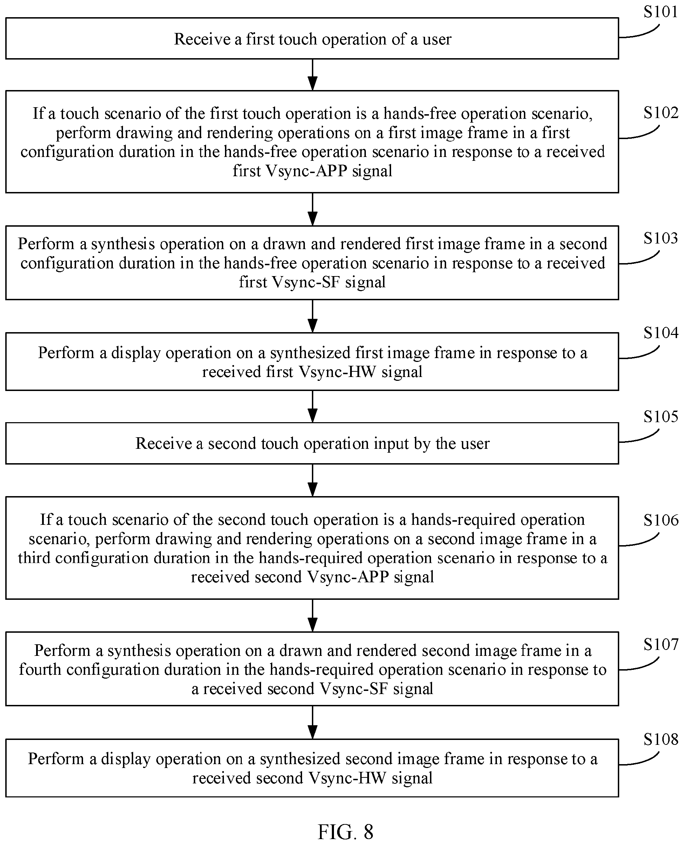

FIG. 8 is a flowchart of a display method according to Embodiment 1 of this application. As shown in FIG. 8, the display method provided in Embodiment 1 of this application may include the following steps:

Step S101: Receive a first touch operation input by a user.

Step S102: If a touch scenario of the first touch operation is a hands-free operation scenario, perform drawing and rendering operations on a first image frame in a first configuration duration in the hands-free operation scenario in response to a received first Vsync-APP signal (that is, a first application vertical synchronization signal).

Step S103: Perform a synthesis operation on a drawn and rendered first image frame in response to a received first Vsync-SF signal (that is, a first synthesis vertical synchronization signal) in a second configuration duration in the hands-free operation scenario.

Step S104: Perform a display operation on a synthesized first image frame in response to a received first Vsync-HW signal (that is, a first hardware vertical synchronization signal).

This embodiment of this application includes two touch operation scenarios: One is a hands-free operation scenario, for example, a tapping operation scenario. The other is a hands-required operation scenario. The hands-required operation scenario is also referred to as a hand-following operation scenario. The hands-required operation scenario may include a hands-required sliding operation scenario and a hands-required pressing operation scenario.

The first configuration duration is a drawing duration configured for the drawing and rendering operations in the hands-free operation scenario. The second configuration duration is a synthesis duration configured for the synthesis operation in the hands-free operation scenario. An interval between the first Vsync-SF signal and the first Vsync-APP signal is the first configuration duration. An interval between the first Vsync-HW signal and the first Vsync-SF signal is the second configuration duration. As shown in FIG. 3 and FIG. 4, the first configuration duration is 19.2 ms, and the second configuration duration is 13.1 ms.

As shown in FIG. 3, a display process of a frame 1 is used as an example. Drawing and rendering operations are performed on the frame 1 in response to a received first Vsync-APP signal 11, to obtain a drawn and rendered frame 1. Next, when a first Vsync-SF signal 22 at an interval of the first configuration duration (that is, 19.2 ms) from the first Vsync-APP signal 11 is received, a synthesis operation is performed on the drawn and rendered frame 1, to obtain a synthesized frame 1. Then, when a first Vsync-HW signal 33 at an interval of the second configuration duration (that is, 13.1 ms) from the first Vsync-SF signal 22 is received, a display operation is performed on the synthesized frame 1, to refresh an image corresponding to the frame 1 onto a screen.

It should be noted that the first Vsync-HW signal 33 is located after the first Vsync-SF signal 22, and the first Vsync-SF signal 22 is located after the first Vsync-APP signal 11.

Step S105: Receive a second touch operation input by the user.

Step S106: If a touch scenario of the second touch operation is a hands-required operation scenario, perform drawing and rendering operations on a second image frame in a third configuration duration in the hands-required operation scenario in response to a received second Vsync-APP signal (that is, a second application vertical synchronization signal).

Step S107: Perform a synthesis operation on a drawn and rendered second image frame in response to a received second Vsync-SF signal (that is, a second synthesis vertical synchronization signal) in a fourth configuration duration in the hands-required operation scenario.

Step S108: Perform a display operation on a synthesized second image frame in response to a received second Vsync-HW signal (that is, a second hardware vertical synchronization signal).

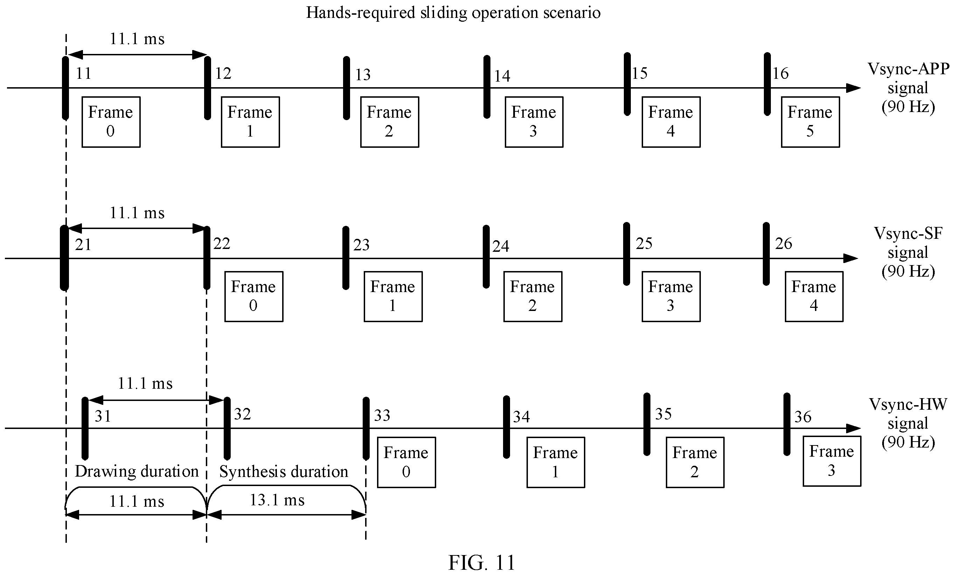

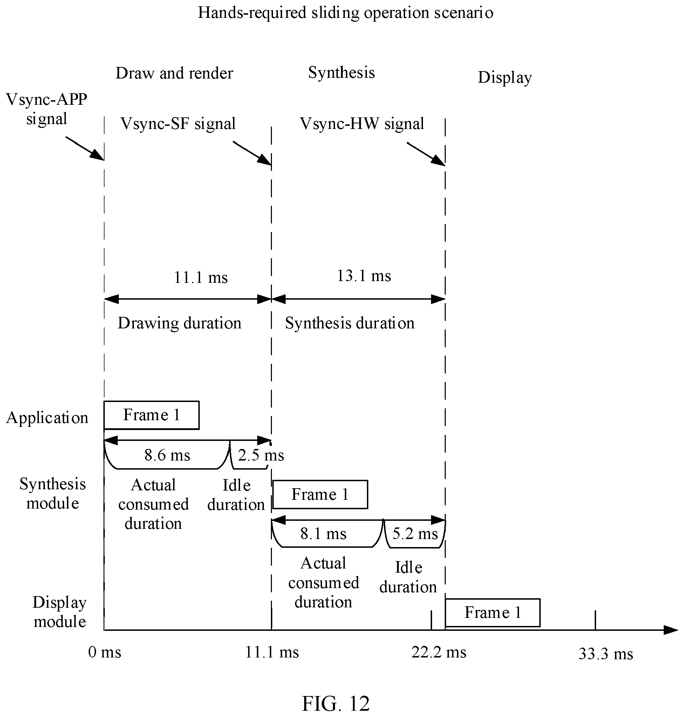

The third configuration duration is a drawing duration configured for the drawing and rendering operations in the hands-required operation scenario. The fourth configuration duration is a synthesis duration configured for the synthesis operation in the hands-required operation scenario. An interval between the second Vsync-SF signal and the second Vsync-APP signal is the third configuration duration. An interval between the second Vsync-HW signal and the second Vsync-SF signal is the fourth configuration duration. The third configuration duration is less than the first configuration duration, and/or the fourth configuration duration is less than the second configuration duration. For example, as shown in FIG. 11 and FIG. 12, the first configuration duration is 11.1 ms, and the second configuration duration is 13.1 ms.

As shown in FIG. 11, a display process of a frame 0 is used as an example. Drawing and rendering operations are performed on the frame 0 in response to a received second Vsync-APP signal 11, to obtain a drawn and rendered frame 0. Next, when a second Vsync-SF signal 22 at an interval of the third configuration duration (that is, 11.1 ms) from the second Vsync-APP signal 11 is received, a synthesis operation is performed on the drawn and rendered frame 0, to obtain a synthesized frame 0. Then, when a second Vsync-HW signal 33 at an interval of the fourth configuration duration (that is, 13.1 ms) from the second Vsync-SF signal 22 is received, a display operation is performed on the synthesized frame 0, to refresh an image corresponding to the frame 0 onto the screen.

It should be noted that the second Vsync-HW signal 33 is located after the second Vsync-SF signal 22, and the second Vsync-SF signal 22 is located after the second Vsync-APP signal 11.

As shown in FIG. 12, in a hands-required operation scenario (for example, a hands-required sliding operation scenario), when drawing and rendering operations are performed based on a drawing duration corresponding to the hands-required operation scenario, an idle duration is 2.5 ms; and when a synthesis operation is performed based on a synthesis duration corresponding to the hands-required operation scenario, an idle duration is 5.2 ms. In this way, in comparison with the display process shown in FIG. 4, in this application, the idle duration in drawing and rendering in the hands-required operation scenario is shortened, and a duration of an entire display process is shortened, thereby improving hand-following performance. Specifically, in this application, in the hands-free operation scenario, one frame of image needs to undergo about three Vsync periodicities before being output to a display for display; and in the hands-required sliding operation scenario, one frame of image can be output to the display for display after about two Vsync periodicities. In this way, in comparison with the hands-free operation scenario in FIG. 4, in the hands-required sliding operation scenario in this application, one Vsync periodicity may be advanced to refresh an image to the display, thereby improving hand-following performance in the hands-required sliding operation scenario.

In the display method provided in this embodiment of this application, different working durations are configured for different touch operation scenarios, to better adapt to different requirements in different application scenarios. For example, the hands-free operation scenario may be an operation of tapping a touchscreen by the user, and the hands-required operation scenario may be a hands-required sliding operation performed on the touchscreen by the user, for example, dragging an icon on a displayed screen. Generally, in comparison with a tapping operation, the user has a higher requirement on the hand-following performance for a hands-required sliding operation. Therefore, in this embodiment of this application, a total configuration duration corresponding to drawing and synthesis in the hands-required sliding operation scenario may be less than a total configuration duration of drawing and synthesis in the tapping operation scenario. In this way, in the tapping operation scenario, the drawing and rendering operations, the synthesis operation, and the display operation are performed based on the longer configuration duration. This does not affect application experience of the user and can reduce a load on the electronic device. In the hands-required sliding operation scenario, the drawing and rendering operations, the synthesis operation, and the display operation are performed based on the shorter configuration duration. This can reduce a touch delay, improve hand-following performance, and improve user experience.

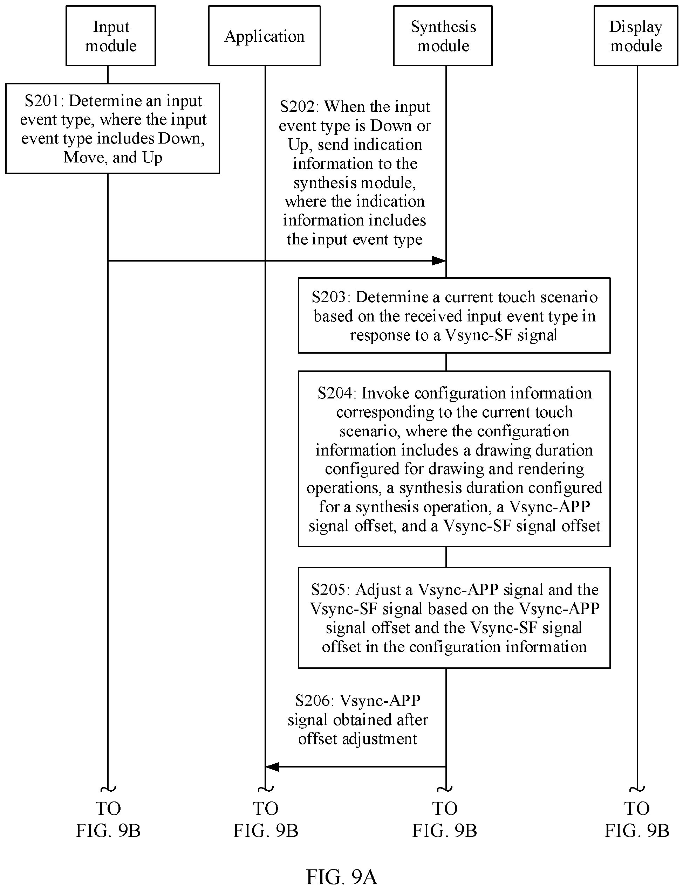

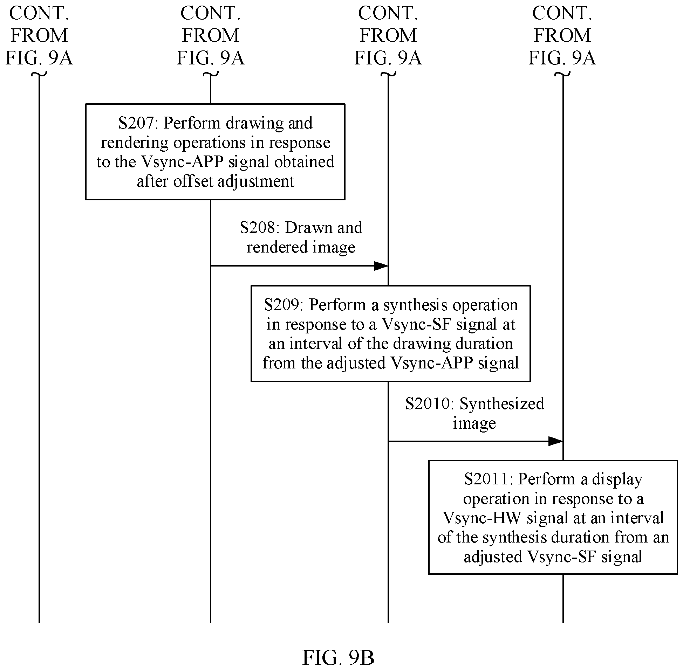

With reference to FIG. 9A and FIG. 9B, the following describes interaction between related modules of the method provided in Embodiment 1 of this application. The related modules include an Input module, an application, a synthesis module, and a display module.

Step S201: When an electronic device receives a touch operation input by a user, the Input module may determine an input event type.

The input event types include a Down event, a Move event, and an Up event. The Down event indicates current presence at the screen, the Move event indicates that sliding is currently performed on the screen, and the Up event indicates current absence from the screen.

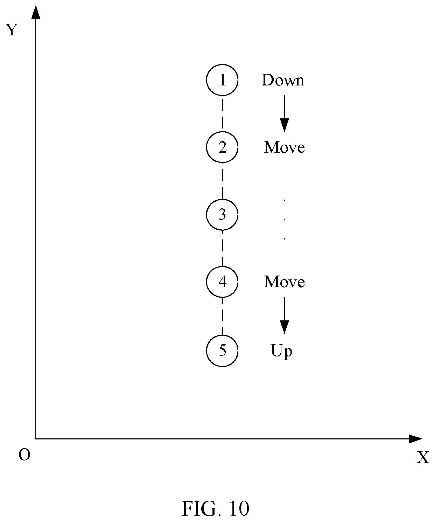

FIG. 10 is a diagram of a scenario in which a user performs a sliding operation on a display according to an embodiment of this application. In FIG. 10, for example, a path according to which the user performs sliding on the display is displayed by using a position 1, a position 2, a position 3, a position 4, and a position 5. The position 1, the position 2, the position 3, the position 4, and the position 5 indicate corresponding coordinates positions on the display.

The user presses the display from the position 1, and then slides downward along a straight line until a hand is lifted to leave the display at the position 5. It should be noted that in a process of sliding downward along the straight line, a plurality of positions are passed. In FIG. 10, only the position 2, the position 3, and the position 4 are shown as examples.

In the process in which the user performs the sliding operation, the Input module may determine an input event type corresponding to each contact. For example, an input event type corresponding to the position 1 in FIG. 10 is Down, an input event type corresponding to the position 5 is Up, and input event types between the position 1 and the position 5 are all Move. For example, input event types corresponding to the position 2, the position 3, and the position 4 are all Move. It should be understood that, before the position 5, operations performed by the user are all hands-required sliding operations. In the position 5, a finger of the user leaves the screen.

It should be noted that the Input module may be not only configured to determine an input event type, but also configured to obtain coordinates information corresponding to a touch operation, and send the coordinates information to the application for drawing and rendering operations.

Step S202: When the input event type is Down or Up, the Input module sends corresponding input event type information to the synthesis module.

For example, if the Input module determines that the current input event type is a Down event, the Input module may send first indication information to the synthesis module. The first indication information is used to indicate that a currently received input event is a Down event. For another example, if the Input module determines that the current input event type is an Up event, the Input module may send second indication information to the synthesis module. The second indication information is used to indicate that a currently received input event is an Up event.

When determining that the current input event type is the Move event, the Input module may not send any indication information to the synthesis module.

Step S203: The synthesis module determines a current touch scenario based on the currently received input event type in response to a Vsync-SF signal.

It should be noted that each time the synthesis module determines the current touch scenario, the synthesis module may receive only one Down event, the synthesis module may receive only one Up event, or the synthesis module may receive two events: one Down event and one Up event respectively. In another case, the synthesis module does not receive any event.

Correspondingly, in response to the Vsync-SF signal, if the synthesis module currently receives only the Down event, the synthesis module determines that the current touch scenario is a hands-required operation scenario, for example, a hands-required sliding operation scenario or a hands-required pressing operation scenario. If the synthesis module currently receives two events (one Down event and one Up event), the synthesis module determines that the current touch scenario is a hands-free operation scenario, for example, a tapping operation scenario. If the synthesis module currently receives only the Up event, the synthesis module determines that the current touch scenario is a hands-free operation scenario.

Step S204: The synthesis module invokes configuration information corresponding to the current touch scenario.

The configuration information may include a drawing duration configured for drawing and rendering, a synthesis duration configured for synthesis, a Vsync-APP signal offset, and a Vsync-SF signal offset.

For example, the hands-free operation scenario corresponds to first configuration information. The first configuration information may include a first configuration duration and a second configuration duration. The first configuration information may further include a first offset and a second offset. The first offset is a Vsync-APP signal offset corresponding to the hands-free operation scenario. The second offset is a Vsync-SF signal offset corresponding to the hands-free operation scenario.

For example, the hands-required operation scenario corresponds to second configuration information. The second configuration information may include a third configuration duration and a fourth configuration duration. The second configuration information may further include a third offset and a fourth offset. The third offset is a Vsync-APP signal offset corresponding to the hands-required operation scenario. The fourth offset is a Vsync-SF signal offset corresponding to the hands-required operation scenario.

The third configuration duration may be less than the first configuration duration, and the fourth configuration duration is the same as the second configuration duration. Alternatively, the fourth configuration duration may be less than the second configuration duration, and the third configuration duration is the same as the first configuration duration. Alternatively, the third configuration duration may be less than the first configuration duration, and the fourth configuration duration may be less than the second configuration duration. A total configuration duration of drawing and rendering and synthesis in the hands-required sliding operation scenario is less than a total configuration duration of drawing and rendering and synthesis in the hands-free sliding operation scenario.

Correspondingly, the third offset may be different from the first offset; or the fourth offset may be different from the second offset; or the third offset may be different from the first offset, and the fourth offset may be different from the second offset.

Step S205: The synthesis module adjusts a Vsync-APP signal and a Vsync-SF signal based on the Vsync-APP signal offset and the Vsync-SF signal offset in the configuration information.

Step S206: The synthesis module sends, to the application, a Vsync-APP signal obtained after offset adjustment.

Step S207: The application performs drawing and rendering operations in response to the Vsync-APP signal obtained after offset adjustment.

Step S208: The application sends a drawn and rendered image to a buffer queue of the synthesis module.

Step S209: The synthesis module performs a synthesis operation in response to a Vsync-SF signal at an interval of the drawing duration from the adjusted Vsync-APP signal.

Step S2010: The synthesis module sends a synthesized image to a buffer queue of the display module.

Step S2011: The display module performs a display operation in response to a Vsync-HW signal at an interval of the synthesis duration from the adjusted Vsync-SF signal.

For example, in step S203, it is determined that the current touch scenario is the hands-required sliding scenario, the Vsync-APP signal offset in the configuration information corresponding to the hands-required sliding scenario is -2 ms, and the Vsync-SF signal offset is - 2 ms. In this way, as shown in FIG. 11, in step S205, the synthesis module adjusts the Vsync-APP signal and the Vsync-SF signal based on the Vsync-APP signal offset and the Vsync-SF signal offset corresponding to the hands-required sliding scenario. A sending rhythm of the adjusted Vsync-APP signal, the adjusted Vsync-SF signal, and the Vsync-HW signal is shown in FIG. 11.

Next, in step S206 to step S2011, the drawing and rendering operations, the synthesis operation, and the display operation are performed based on a sending rhythm of the adjusted Vsync-APP signal and the adjusted Vsync-SF signal, and the drawing duration and the synthesis duration corresponding to the hands-required sliding scenario, until the current input event type received by the synthesis module is Up. When the current input event type received by the synthesis module is Up, the synthesis module invokes the configuration information corresponding to the hands-free operation scenario, and the drawing and rendering operations, the synthesis operation, and the display operation are subsequently performed by using the sending rhythm of the Vsync-APP signal and the Vsync-SF signal corresponding to the hands-free sliding operation scenario and based on the configuration duration corresponding to the hands-free sliding scenario.

FIG. 12 is a schematic diagram of a display process corresponding to FIG. 11. With reference to FIG. 11 and FIG. 12, in the hands-required sliding operation scenario, the drawing duration in the configuration information is 11.1 ms, the synthesis duration in the configuration information is 13.1 ms, the Vsync-APP signal offset is -2 ms, and the Vsync-SF signal offset is - 2 ms. In this way, a duration of performing drawing and rendering, synthesis, and display on one frame of image may be reduced to 22.1 ms. In other words, in this application, in the hands-required sliding operation scenario, one frame of image needs to undergo about two Vsync periodicities before being output to a display for display. In this way, in comparison with FIG. 4, one Vsync periodicity may be advanced to refresh an image to the display, thereby improving hand-following performance in the hands-required sliding operation scenario.

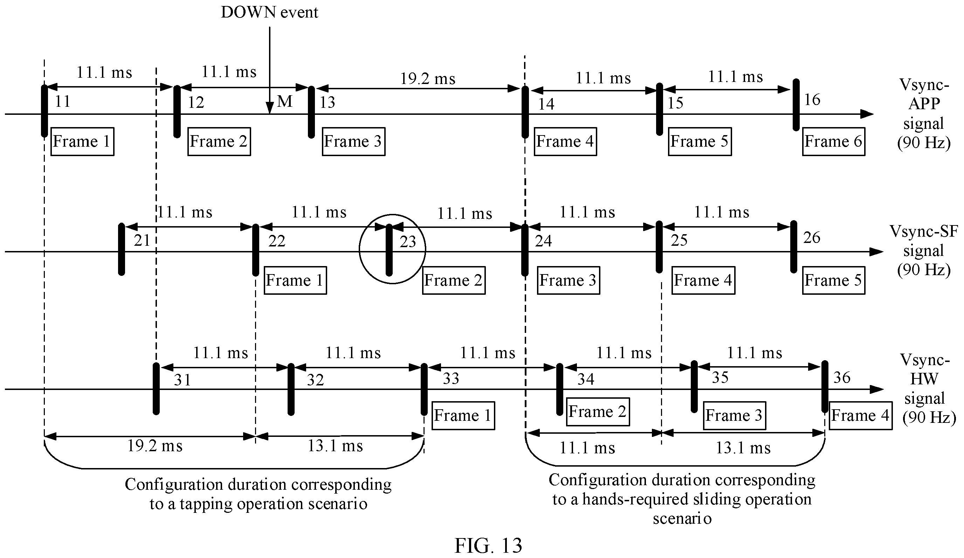

For example, as shown in FIG. 13, in a display process of a frame 1, the synthesis module uses the configuration information corresponding to the hands-free operation scenario. The drawing duration configured for the drawing and rendering operations is 19.2 ms. The synthesis duration configured for the synthesis operation is 13.1 ms. In this way, drawing and rendering is performed on a frame 1 in response to a Vsync-APP signal 11, a synthesis operation is performed on the frame 1 in response to a Vsync-SF signal 22, and a display operation is performed on a synthesized frame 1 in response to a Vsync-HW signal 33. An interval between the Vsync-APP signal 11 and the Vsync-SF signal 22 meets a drawing duration of 19.2 ms corresponding to the hands-free operation scenario. An interval between the Vsync-SF signal 22 and the Vsync-HW signal 33 meets a synthesis duration of 13.1 ms corresponding to the hands-free operation scenario.

The Vsync-APP signal offset and/or the Vsync-SF signal offset causes a change of a corresponding configuration duration, thereby implementing modification on the drawing duration and the synthesis duration.

It is assumed that a Down event sent by the Input module is received at an M point between the Vsync-APP signal 12 and the Vsync-APP signal 13. When the Vsync-SF signal 23 is received, the synthesis module adjusts a sending rhythm of the Vsync-APP signal and the Vsync-SF signal in a subsequent Vsync periodicity based on the configuration information corresponding to the hands-required sliding operation scenario. In other words, the synthesis module adjusts start moments of the subsequent Vsync-APP signal and the subsequent Vsync-SF signal based on the configuration information corresponding to the hands-required sliding operation scenario, and periodically sends the Vsync-APP signal and the Vsync-SF signal at the newly determined start moments. As shown in FIG. 13, an offset of a Vsync-APP signal 14 after the Vsync-SF signal 23 is -2 ms, and an offset of a Vsync-SF signal 24 is -2 ms. Before and after adjustment, an offset of a Vsync-APP signal changes. Therefore, after offset adjustment, an interval between a first Vsync-APP signal (the Vsync-APP signal 14) and a previous Vsync-APP signal (the Vsync-APP signal 13) is no longer one Vsync periodicity (11.1 ms). In FIG. 13, an interval (that is, a first duration) between the Vsync-APP signal 13 and the Vsync-APP signal 14 is equal to a sum of an interval between the Vsync-SF signal 23 and the Vsync-SF signal 24 and an interval between the Vsync-APP signal 13 and the Vsync-SF signal 23. In other words, the interval between the Vsync-APP signal 13 and the Vsync-APP signal 14 is equal to 19.2 ms. In other words, the first duration (19.2 ms) between the Vsync-APP signal 14 and the Vsync-APP signal 13 is different from a second duration (11.1 ms) between the Vsync-APP signal 14 and the Vsync-APP signal 15. Correspondingly, the offset of the Vsync-SF signal does not change before and after adjustment. Therefore, after offset adjustment, a third duration (11.1 ms) between the Vsync-SF signal 24 and the Vsync-SF signal 23 is the same as a fourth duration (11.1 ms) between the Vsync-SF signal 24 and the Vsync-SF signal 25.

Then, the application performs the drawing and rendering operations based on the drawing duration corresponding to the hands-required sliding operation scenario, and the synthesis module performs the synthesis operation and the display operation based on the synthesis duration corresponding to the hands-required sliding operation scenario. For example, drawing and rendering is performed on a frame 4 in response to the Vsync-APP signal 14, a synthesis operation is performed on the frame 4 in response to the Vsync-SF signal 25, and a display operation is performed on a synthesized frame 4 in response to a Vsync-HW signal 36. Based on an offset of a Vsync-APP signal, an interval between the Vsync-APP signal 14 and the Vsync-SF signal 25 meets the drawing duration of 11.1 ms corresponding to the hands-required operation scenario, and an interval between the Vsync-SF signal 25 and the Vsync-HW signal 36 meets the synthesis duration of 13.1 ms corresponding to the hands-required operation scenario.

With reference to FIG. 13, it may be learned that, before the hands-required sliding operation of the user is received, the frame 1 needs to undergo about three Vsync periodicities before being output to the display module for display. After the hands-required sliding operation of the user is received, the frame 4 can be output to the display module for display after approximately two Vsync periodicities. In this way, one Vsync periodicity may be advanced to refresh the image to the display, thereby improving hand-following performance in the hands-required sliding operation scenario.

It should be noted that the foregoing embodiment is described by using the example in which the Vsync-APP signal offset is adjusted in the hands-required sliding operation scenario. This does not indicate a limitation on offset adjustment manners in different operation scenarios. For example, different operation scenarios correspond to different Vsync-APP signal offsets and different Vsync-SF signal offsets. For another example, different operation scenarios correspond to a same Vsync-APP signal offset and different Vsync-SF signal offsets.

A method for the drawing duration configured for the drawing and rendering operations and the synthesis duration configured for the synthesis operation in the hands-required operation scenario is not limited in this embodiment of this application.

In an implementable manner, a historical drawing duration for performing the drawing and rendering operations and a historical synthesis duration for performing the synthesis operation are obtained. Then, the drawing duration configured for the drawing and rendering operations and the synthesis duration configured for the synthesis operation are determined based on the historical drawing duration and the historical synthesis duration. The drawing duration configured for the drawing and rendering operations is greater than or equal to a maximum drawing duration in the historical drawing duration, and the synthesis duration configured for the synthesis operation is greater than or equal to a maximum synthesis duration in the historical synthesis duration.

First, it should be noted that the historical drawing duration indicates an actually consumed duration for performing each time of drawing and rendering operations, and the historical synthesis duration indicates an actually consumed duration for performing each synthesis operation.

All collected historical drawing durations include a historical drawing duration upper limit (that is, the maximum drawing duration) and a historical drawing duration lower limit (that is, a minimum drawing duration). Similarly, all collected historical synthesis durations include a historical synthesis duration upper limit (that is, the maximum synthesis duration) and a historical synthesis duration lower limit (that is, a minimum synthesis duration). However, the historical drawing duration upper limit and the historical synthesis duration upper limit may include abnormal points. Therefore, after the historical drawing duration and the historical synthesis duration are collected, the abnormal points may be first removed by using an abnormal point removal algorithm. Then, the historical drawing duration upper limit and the historical synthesis duration upper limit are determined based on remaining normal points.

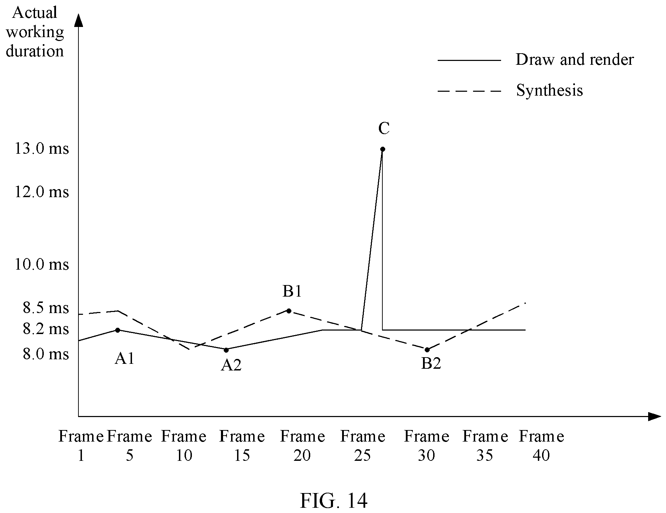

For example, FIG. 14 shows historical drawing durations for performing drawing and rendering operations on a frame 1 to a frame 40 and historical synthesis durations for performing a synthesis operation on the frame 1 to the frame 40. As shown in FIG. 14, a duration upper limit of the collected historical drawing durations is 13.0 ms (a point C in FIG. 13), and a duration lower limit of the collected historical drawing durations is 8.0 ms (a point A2 in FIG. 13). A duration upper limit of the collected historical synthesis durations is 8.5 ms (a point B1 in FIG. 13), and a duration lower limit of the collected historical synthesis durations is 8.0 ms (a point B2 in FIG. 13).

However, it can be learned from FIG. 14 that the historical drawing durations basically fluctuate around 8.0 ms, and the point C is obviously an abnormal point. Therefore, the point C may be first removed, and then a historical drawing duration upper limit in the remaining normal points is determined as 8.2 ms (a point A1 in FIG. 13).

Based on the foregoing collected results, it may be determined that the drawing duration configured for the drawing and rendering operations is greater than 8.2 ms, and the synthesis duration configured for the synthesis operation is greater than 8.5 ms. For example, a configured drawing duration corresponding to the hands-required sliding operation scenario may be 11.1 ms, and a configured synthesis duration corresponding to the hands-required sliding operation scenario may be 13.1 ms. In this way, a total configuration duration in the hands-required sliding operation scenario is 24.2 ms.

In a manner of setting offsets of a Vsync-APP signal and a Vsync-SF signal, the drawing duration configured for the drawing and rendering operations is 11.1 ms, and the synthesis duration configured for the synthesis operation is 13.1 ms.

For example, a Vsync periodicity is 11.1 ms, the offset of the Vsync-APP signal is set to -2 ms, and the offset of the Vsync-SF signal is set to -2 ms.

In this way, $T_{app}$ = 11.1 + (-2) - (-2) = 11.1 ms may be obtained through calculation according to the foregoing first relational expression. $T_{sf}$ = 11.1 - (-2) = 13.1 ms is obtained through calculation according to the foregoing second relational expression.

It should be noted that $T_{app}$ may be less than 11.1 ms in this embodiment of this application. In other words, in this embodiment of this application, when $T_{app}$ obtained through calculation is less than 11.1 ms, $T_{te}$ does not need to be added based on $T_{app}$ obtained through calculation, to shorten the configuration duration in the hands-required sliding operation scenario.

It should be noted that a form of the configuration information is not limited in this embodiment of this application. For example, the configuration information may include the drawing duration configured for the drawing and rendering operations and the synthesis duration configured for the synthesis operation (for example, the configuration information is that $T_{app}$ = 11.1 ms, and $T_{sf}$ = 13.1 ms). For another example, the configuration information may also include the offset of the Vsync-APP signal and the offset of the Vsync-SF signal (for example, the configuration information is that appOffset = -2 ms, and sf Offset = -2 ms). For another example, the configuration information may alternatively include the drawing duration configured for the drawing and rendering operations, the synthesis duration configured for the synthesis operation, the Vsync-APP signal offset, and the Vsync-SF signal offset.

It should be further noted that at least one of a value of the drawing duration configured for the drawing and rendering operations and a value of the synthesis duration configured for the synthesis operation is different in configuration information of different touch operation scenarios. Similarly, at least one of a value of the offset of the Vsync-APP signal and a value of the offset of the Vsync-SF signal is different in the configuration information of different touch operation scenarios.

In addition, the drawing duration configured for the drawing and rendering operations and the synthesis duration configured for the synthesis operation are determined based on historical statistical data, and an image processing status of the electronic device changes in real time. Therefore, if the drawing and rendering operations, the synthesis operation, and the display operation are performed based on a same configuration duration. The following case may occur: Drawing and rendering of an image cannot be completed in the configured drawing duration, or image synthesis cannot be completed in the configured synthesis duration. To avoid this case, this embodiment of this application may periodically detect an actual case of performing the drawing and rendering operations, the synthesis operation, and the display operation based on the current configuration duration.

For example, a quantity of times that the drawing and rendering operations cannot be completed in a currently configured drawing duration when the drawing duration is currently configured for the drawing and rendering operations and a quantity of times that the synthesis operation cannot be completed in a configured drawing duration when the synthesis duration is currently configured for the synthesis operation may be determined at intervals of a preset time interval. When a quantity of times that a corresponding operation cannot be completed in the corresponding configuration duration reaches a preset quantity threshold, values of the drawing duration configured for the drawing and rendering operations and the synthesis duration configured for the synthesis operation are redetermined. Then, the drawing and rendering operations, the synthesis operation, and the display operation are performed based on the reconfigured drawing duration and the reconfigured synthesis duration.

To further improve user experience, this embodiment of this application may further subdivide the hands-required sliding operation scenario, so that different hands-required sliding operation scenarios correspond to different configuration durations.

In an implementable manner, division of hand-following performance levels may be performed for different hands-required sliding operations. In this way, after the hands-required sliding operation of the user is received, a hand-following performance level corresponding to the hands-required sliding operation may be first determined. Then, the configured drawing duration and the configured synthesis duration are determined based on the hand-following performance level. Different hand-following performance levels correspond to different configuration durations.

For example, the hands-required sliding operation may be specifically classified as a finger hands-required operation scenario and a stylus hands-required operation scenario. The finger hands-required operation scenario indicates a scenario in which a finger performs a hands-required sliding operation on a display. The stylus hands-required operation scenario indicates a scenario in which a stylus performs a hands-required sliding operation on the display. A hand-following performance requirement of performing the hands-required sliding operation on the display by the stylus is higher than a hand-following performance requirement of performing the hands-required sliding operation on the display by the finger. In this way, in this embodiment of this application, division of hand-following performance requirement levels may be performed for specific scenarios of the hands-required sliding operation. For example, a hand-following performance requirement level of the hands-required sliding operation performed by the stylus on the display is a level 1, and a hand-following performance requirement level of the hands-required sliding operation performed by the finger on the display is a level 2. The hand-following performance requirement level of the level 1 is higher than the hand-following performance requirement level of the level 2.

Further, different hand-following performance requirement levels correspond to different configuration durations. For example, a third configuration duration corresponding to the stylus hands-required operation scenario is less than a third configuration duration corresponding to the finger hands-required operation scenario, and/or a fourth configuration duration corresponding to the stylus hands-required operation scenario is less than a fourth configuration duration corresponding to the finger hands-required operation scenario. For example, a total configuration duration of a third configuration duration and a fourth configuration duration corresponding to the hands-required sliding operation scenario whose hand-following performance requirement level is the level 1 is 11.1 ms. A total configuration duration of a third configuration duration and a fourth configuration duration corresponding to the hands-required sliding operation scenario whose hand-following performance requirement level is the level 2 is 24.2 ms. In this way, when it is determined that the hands-required sliding operation is the hands-required sliding operation performed by the finger on the display, the drawing and rendering operations, the synthesis operation, and the display operation of the image may be completed in 24.2 ms. Correspondingly, when it is determined that the hands-required sliding operation is the hands-required sliding operation performed by the stylus on the display, the drawing and rendering operations, the synthesis operation, and the display operation of the image may be completed in 11.1 ms. In this way, in comparison with the finger hands-required operation scenario, in the stylus hands-required operation scenario, one Vsync periodicity may be further advanced to refresh the image to the display, to better adapt to hand-following performance requirements in different hands-required sliding operation scenarios.

This application does not limit a method for determining whether the hands-required sliding operation is triggered by the finger or the stylus. For example, a touchscreen temperature corresponding to a sliding track of the hands-required sliding operation may be detected. When the touchscreen temperature is higher than a temperature threshold, it is determined that the current hands-required sliding operation is a finger-triggered sliding operation. When the touchscreen temperature is less than or equal to the temperature threshold, it is determined that the current hands-required sliding operation is a stylus-triggered sliding operation.

It should be noted that this embodiment of this application is described by using an example in which division of hand-following performance requirement levels is performed when an object of the hands-required sliding operation is the finger or the stylus, but does not limit division of the hand-following performance requirement levels. For example, division of hand-following performance requirement levels may be alternatively performed based on interface attributes of the hands-required sliding operation. For example, a hand-following performance requirement of an interface that is a game application interface is a level 1, and a hand-following performance requirement of an interface that is a video application interface is a level 2.

In summary, in the display method provided in Embodiment 1 of this application, in the hands-free operation scenario, the drawing and rendering operations, the synthesis operation, and the display operation are performed based on the configuration duration corresponding to the hands-free operation scenario; and in the hands-required operation scenario, the drawing and rendering operations, the synthesis operation, and the display operation are performed based on the configuration duration corresponding to the hands-required operation scenario. In this way, different durations are configured for different touch operation scenarios, to better adapt to different requirements in different application scenarios. Specifically, in the hands-required sliding operation scenario, the drawing and rendering operations, the synthesis operation, and the display operation are performed based on the shorter configuration duration. This can reduce a touch delay, improve hand-following performance of the hands-required sliding operation scenario, and improve user experience.

It should be noted that a load of the electronic device is relatively large when the electronic device performs a frame rate switching operation or when a GPU is used to perform the synthesis operation. In this case, if the drawing and rendering operations, the synthesis operation, and the display operation are performed based on the configuration duration corresponding to the hands-required sliding operation scenario, the application or the synthesis module may not complete respective tasks in time. Therefore, in this application, before the drawing and rendering operations, the synthesis operation, and the display operation are performed based on the configuration duration corresponding to the hands-required sliding operation scenario, it may be first determined whether the frame rate switching operation is performed at a current moment. When the frame rate switching operation is not performed at the current moment, it is determined whether the synthesis operation is performed by using the GPU at the current moment. When the synthesis operation is not performed by using the GPU at the current moment, the drawing and rendering operations, the synthesis operation, and the display operation are performed in response to the hands-required sliding operation based on the configuration duration corresponding to the hands-required sliding operation scenario.

**Embodiment 2**

In a display method provided in Embodiment 2 of this application, a quantity of buffered frames accumulated in a buffer queue is optimized, to reduce a third part of a delay T3, thereby improving hand-following performance.

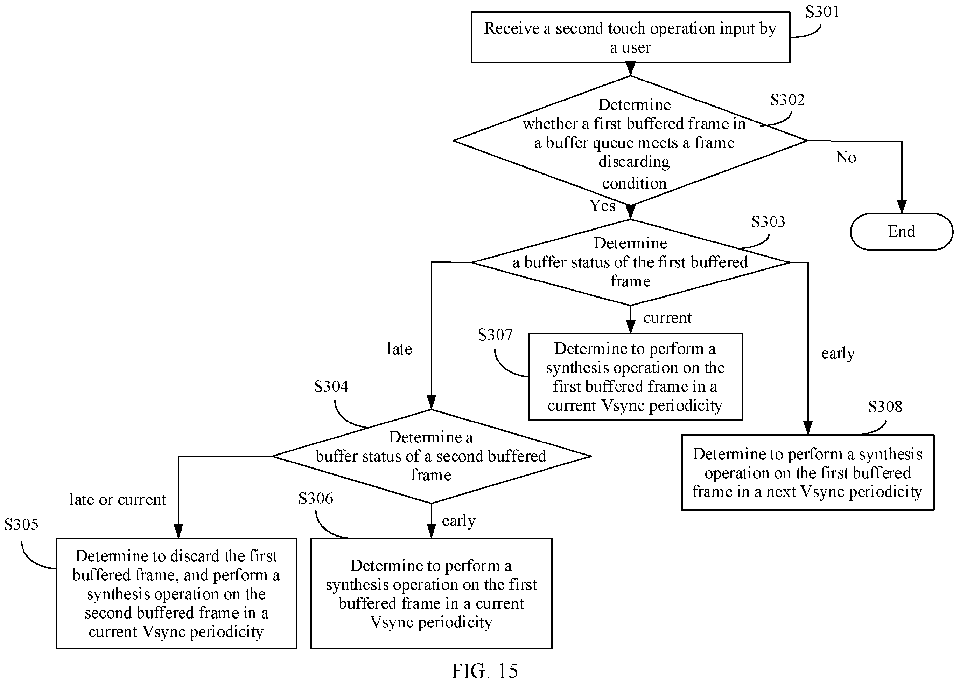

FIG. 15 is a flowchart of a display control method according to Embodiment 2 of this application. As shown in FIG. 15, the display method provided in Embodiment 1 of this application may include the following steps:

    Step S301: Receive a second touch operation input by a user.
    Step S302: If a touch scenario of the second touch operation is a hands-required operation scenario, and there are a plurality of buffered frames in a buffer queue used to buffer a drawn and rendered image frame, it is determined whether the buffered frame in the buffer queue meets a frame discarding condition.

In this embodiment of this application, the buffer queue indicates a buffer queue of a synthesis module, that is, the buffer queue used to buffer the drawn and rendered image frame. For example, the buffer queue includes a first buffered frame, a second buffered frame, and a third buffered frame. The first buffered frame is an image frame that is in a first position of the buffer queue.

As shown in FIG. 5, in a first Vsync periodicity, the buffer queue includes two buffered frames: a drawn and rendered frame 2 and a drawn and rendered frame 3 respectively. The frame 2 is placed in the first position of the buffer queue. The frame 3 follows the frame 2. Therefore, in the first Vsync periodicity, the frame 2 in the buffer queue is a first buffered frame, and the frame 3 is a second buffered frame.

In this embodiment of this application, frame discarding indicates that the first buffered frame is discarded in an appropriate opportunity and the second buffered frame is used to participate in the synthesis operation, when buffered frames buffer are accumulated in the buffer queue. In this way, an image can be displayed on a display as soon as possible.

In an implementable manner, in this embodiment of this application, it may be first determined whether the first buffered frame meets a frame discarding condition. If the first buffered frame meets the frame discarding condition, it is further determined to use the first buffered frame or the second buffered frame to participate in the synthesis operation. If it is determined to use the second buffered frame to participate in the synthesis operation, the first buffered frame is discarded. A frame discarding manner is not limited in this embodiment of this application. For example, a frame that is determined to be not displayed may be deleted, or a frame that is determined to be not displayed may be overwritten.

The frame discarding condition may include that a timestamp attribute corresponding to the first buffered frame is an automatic timestamp, a current refresh rate is greater than 60 Hz, and a time interval from a previous discarded image frame in the buffer queue is greater than a preset time interval threshold. A first timestamp attribute is used to indicate a first preset display time of the first buffered frame.

The timestamp attribute of the buffered frame may be classified as an automatic timestamp and a manual timestamp. The manual timestamp indicates to specify a display time of a buffered frame. In other words, the display time of the buffered frame cannot be changed. For example, generally, a timestamp attribute of a buffered frame corresponding to video content is a manual timestamp. In other words, a display time of each frame in a video cannot be randomly changed. For example, the first buffered frame is specified to be displayed in a first second, and the second buffered frame is specified to be displayed in a fifth second. The automatic timestamp indicates a timestamp that is not specifically specified and that is automatically generated according to a queuing order and.

Based on human factor analysis, a frame discarding duration in which the user can feel a lag is 25 ms to 58 ms. It means that, when a refresh rate is 60 Hz, and one frame is discarded, a frame space increases to 33.2 ms, and the user can feel a lag; when a refresh rate is 90 Hz, and one frame is discarded, a frame space increases to 22.2 ms, and the user does not feel a lag; when a refresh rate is 120 Hz, and one frame is lost, a frame space increases to 16.6 ms, and the user does not feel a lag. Therefore, to avoid a lag phenomenon, in this embodiment of this application, that the refresh rate is greater than 60 Hz is set as one frame discarding condition. For example, a frame discarding solution may be executed when the refresh rate is 90 Hz or 120 Hz.

With reference to the foregoing analysis, it can be learned that the following phenomenon occurs in a relatively short time: two image frames are discarded consecutively and an obvious lag occurs. Therefore, in this embodiment of this application, that the time interval from the previous discarded image frame in the buffer queue is greater than the preset time interval threshold is set as one frame discarding condition. For example, the time interval from the previous discarded image frame in the buffer queue is greater than 100 ms. In other words, two image frames cannot be discarded consecutively in 100 ms.

The frame discarding condition may further include that the first buffered frame is an image frame of a whitelist application. For example, the whitelist application includes a video application and a game application. In this case, if the first buffered frame is an image frame of the video application or the game application, it is determined that the first buffered frame is the image frame of the whitelist application.

It should be noted that an order of determining frame discarding conditions is not limited in this embodiment of this application: the timestamp of the first buffered frame, whether the current refresh rate is greater than 60 Hz, and whether the time interval from the previous discarded image frame in the buffer queue is greater than the preset time interval threshold.

For example, it may be first determined whether the timestamp attribute of the first buffered frame is the automatic timestamp. If the timestamp attribute of the first buffered frame is the automatic timestamp, it is further determined whether the current refresh rate is greater than 60 Hz. If the current refresh rate is greater than 60 Hz, it may be further determined whether the time interval from the previous discarded image frame in the buffer queue is greater than the preset time interval threshold. If the time interval from the previous discarded image frame in the buffer queue is greater than the preset time interval threshold, it may be further determined whether the first buffered frame is the image frame of the whitelist application. If the first buffered frame is the image frame of the whitelist application, subsequent step S303 may be performed.

Step S303: When the first buffered frame in the buffer queue meets the frame discarding condition, determine a buffer status of the first buffered frame.

In this embodiment of this application, a buffer status of a buffered frame is classified into three types: early, current, and late respectively.

In an implementable manner, the buffer status of the first buffered frame may be determined in the following manner: determining a first expected display time (also referred to as a first preset display time) corresponding to the first buffered frame and a second expected display time (also referred to as a second preset display time). The first preset display time is a preset time of performing the display operation on the first buffered frame. The second preset display time is a preset display time corresponding to a Vsync-SF signal. It may also be understood that the first preset display time is an expected display time corresponding to a Vsync-APP signal used to indicate to perform drawing and rendering operations on the first buffered frame, and the second preset display time is an expected display time corresponding to the current Vsync-SF signal. If the first preset display time is earlier than the second preset display time, it is determined that the buffer status of the first buffered frame is late. If the first preset display time is later than the second preset display time, it is determined that the buffer status of the first buffered frame is early. If the first preset display time is the same as the second preset display time, it is determined that the buffer status of the first buffered frame is current.

First, the first preset display time and the second preset display time are described as follows:

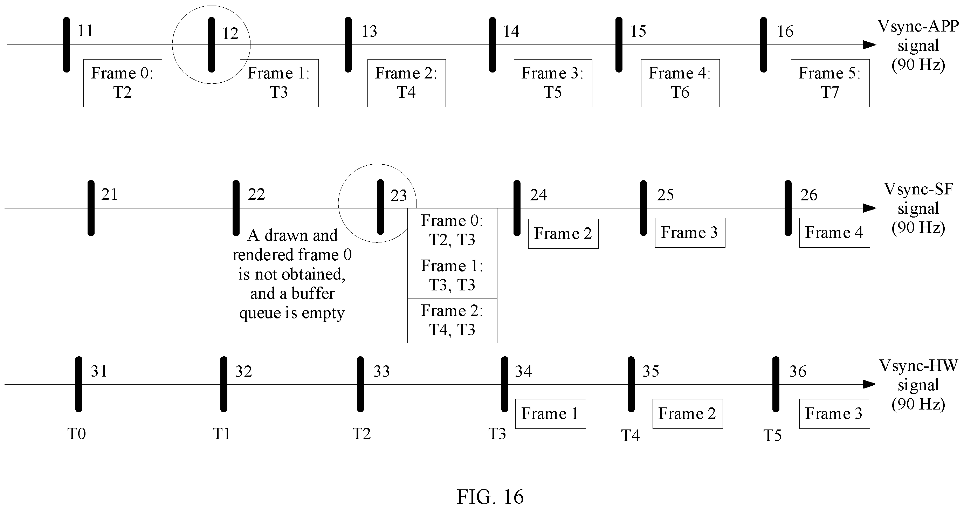

As shown in FIG. 16, each Vsync-APP signal corresponds to one first preset display time, and each Vsync-SF signal also corresponds to one second preset display time. For example, in FIG. 16, a first preset display time corresponding to a Vsync-APP signal 11 is T2, a first preset display time corresponding to a Vsync-APP signal 12 is T3, and a first preset display time corresponding to a Vsync-APP signal 13 is T4. Similarly, in FIG. 16, a second preset display time corresponding to a Vsync-SF signal 23 is T3, a second preset display time corresponding to a Vsync-SF signal 24 is T4, and a second preset display time corresponding to a Vsync-SF signal 25 is T5.

In other words, the first preset display time corresponding to the Vsync-APP signal indicates a preset display time of an image frame that is drawn and rendered under the guidance of the Vsync-APP signal. The second preset display time corresponding to the Vsync-SF signal indicates a preset display time of an image frame that is synthesized under the guidance of the Vsync-SF signal.

In this embodiment of this application, a preset time for performing a display operation on the first buffered frame is referred to as the first preset display time, a preset time for performing a display operation on a second buffered frame is referred to as a third preset display time, and a preset time for performing a display operation on a third buffered frame is referred to as a fourth preset display time.

In an implementable manner, an image frame drawn and rendered in response to the Vsync-APP signal may carry a timestamp. The timestamp is used to indicate a first preset display time corresponding to the image frame. For example, as shown in FIG. 16, a timestamp of a frame 0 drawn and rendered in response to the Vsync-APP signal 11 is T2, a timestamp of a frame 1 drawn and rendered in response to the Vsync-APP signal 12 is T3, and a timestamp of a frame 2 drawn and rendered in response to the Vsync-APP signal 13 is T4.

As shown in FIG. 16, that the current Vsync-SF signal is the Vsync-SF signal 23 is used as an example to describe a process of determining the buffer status of the buffered frame in the buffer queue.

When the Vsync-SF signal 22 is received, an application has not completed drawing and rendering for the frame 0. Therefore, in response to the Vsync-SF signal 22, the synthesis module cannot obtain the drawn and rendered frame 0, and the buffer queue is empty. When the Vsync-SF signal 23 arrives, the application completes drawing and rendering of the frame 0, the frame 1, and the frame 2. In this way, when the Vsync-SF signal 23 is received, the buffer queue includes three buffered frames: the frame 0, the frame 1, and the frame 2. The frame 0 is a first buffered frame, the frame 1 is a second buffered frame, and the frame 2 is a third buffered frame. Second preset display times of the frame 0, the frame 1, and the frame 2 are all T3. A first preset display time corresponding to the frame 0 is T2, a third preset display time corresponding to the frame 1 is T3, and a fourth preset display time corresponding to the frame 2 is T4. In this case, the first preset display time T2 corresponding to the frame 0 is earlier than the second preset display time T3. Therefore, a buffer status of the frame 0 is late. The third preset display time T3 corresponding to the frame 1 is the same as the second preset display time T3. Therefore, a buffer status of the frame 1 is current. The fourth preset display time T4 corresponding to the frame 2 is later than the second preset display time T3. Therefore, a buffer status of the frame 2 is early.

The buffer status of the first buffered frame may include the following several cases:

Case 1: The buffer status of the first buffered frame is late.

When the buffer status of the first buffered frame is late, the following step S304 to step S306 may be performed.

Step S304: Determine a buffer status of the second buffered frame.

For a method for determining the buffer status of the second buffered frame, refer to the foregoing descriptions of step S303. Details are not described herein again.

Step S305: When the buffer status of the second buffered frame is late or current, determine to discard the first buffered frame, and perform a synthesis operation on the second buffered frame in a current Vsync periodicity.

For example, as shown in FIG. 16, in a third Vsync periodicity, in response to the Vsync-SF signal 23, the frame 0 in the late state may be discarded, and the frame 1 is used to participate in this synthesis operation. In this way, the frame 1 can be displayed on the display one Vsync periodicity in advance.

Step S306: When the buffer status of the second buffered frame is early, determine to perform the synthesis operation on the first buffered frame in the current Vsync periodicity.

A buffered frame in the early state indicates a frame that completes drawing and rendering one Vsync periodicity in advance. Therefore, waiting may be performed to a next Vsync periodicity to participate in synthesis.

It should be noted that when the electronic device is actually run, the Vsync-APP signal or the second Vyscn signal may be in a disorder. For example, when a frame rate is switched, the electronic device needs to recalibrate the Vsync periodicity. In this way, the Vsync-APP signal or the Vyscn-SF signal may be received in advance. If the buffer status of the buffered frame is still determined according to the foregoing method when the Vsync-APP signal or the Vyscn-SF signal is received in advance, accumulation of subsequent buffered frames may occur. For example, it is possible to erroneously determine, as an early state, a buffered frame that should be in a current state. In other words, a buffered frame that needs to be taken out and consumed in the current Vsync periodicity for synthesis processing is erroneously determined to be taken out and consumed in a next Vsync periodicity for synthesis processing. This causes accumulation of subsequent buffered frames.

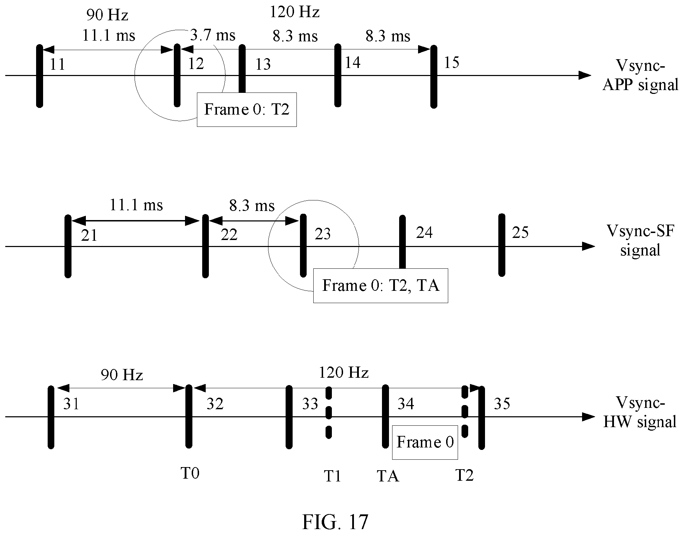

For example, as shown in FIG. 17, a frame rate corresponding to a first Vsync periodicity is 90 Hz. At this frame rate, a Vsync periodicity is 11.1 ms, a time interval between the Vsync-APP signal 11 and the Vsync-APP signal 12 is 11.1 ms, and a time interval between the Vsync-SF signal 21 and the Vsync-SF signal 22 is 11.1 ms. In a second Vsync periodicity, because the frame rate is switched from 90 Hz to 120 Hz, the Vsync-SF signal 23 is received in advance. In this way, a time interval between the Vsync-SF signal 22 and the Vsync-SF signal 23 is less than 11.1 ms.

It is assumed that drawing and rendering is completed for the frame 0 before the Vsync-SF signal 23. In this way, the first preset display time of the frame 0 is still T2 corresponding to the frame rate of 90 Hz, and the second preset display time of the frame 0 is changed to TA corresponding to a frame rate of 120 Hz, where TA is between T1 and T2. In this way, because the first preset display time T2 of the frame 0 is later than the second preset display time TA of the frame 0, it is determined that the buffer status of the frame 0 is early. Actually, the buffer status of the frame 0 should be current.

Based on the foregoing analysis, in this embodiment of this application, when the buffer status of the second buffered frame is early, the following solution may be further used: The synthesis module first determines whether the Vsync-APP signal or the Vsync-SF signal is received in advance; and when the Vsync-APP signal or the Vsync-SF signal is received in advance in the current Vsync periodicity, discards the first buffered frame and determines to use the second buffered frame to synthesize an image frame in the current Vsync periodicity. In this way, accumulation of buffered frames due to a misjudgment of a buffer status can be avoided.

Case 2: The buffer status of the first buffered frame is current.

When the buffer status of the first buffered frame is current, the following step S307 may be performed.

Step S307: Determine to perform a synthesis operation on the first buffered frame in the current Vsync periodicity.

If the buffer status of the first buffered frame is current, a buffer status of a buffered frame after the first buffered frame should be early. Therefore, when it is determined that the buffer status of the first buffered frame is current, it may be directly determined to use the first buffered frame to synthesize an image frame, while the buffer status of the subsequent buffered frame does not need to be further determined.

Case 3: The buffer status of the first buffered frame is early.

When the buffer status of the first buffered frame is early, the following step S308 may be performed.

Step S308: Determine to perform a synthesis operation on the first buffered frame in a next Vsync periodicity.

If the buffer status of the first buffered frame is early, a buffer status of a buffered frame after the first buffered frame should be early. Therefore, when it is determined that the buffer status of the first buffered frame is early, it may be directly determined to use the first buffered frame to synthesize an image frame in the next Vsync periodicity, while the buffer status of the subsequent buffered frame does not need to be further determined. In other words, when it is determined that the buffer status of the first buffered frame is early, the Vsync-SF signal in this Vsync periodicity may be idle, and no synthesis operation is performed on any buffered frame.

Similarly, to avoid a problem of accumulation of buffered frames because a buffered frame that should be in a current state is erroneously determined to be in an early state, when the buffer status of the first buffered frame is early, the following solution may be further used: first determining whether the Vsync-APP signal or the Vsync-SF signal is received in advance in the current Vsync periodicity; and when the Vsync-APP signal or the Vsync-SF signal is received in advance in the current Vsync periodicity, determining to use the first buffered frame to synthesize an image frame in the current Vsync periodicity. In this way, the problem of accumulation of buffered frames due to a misjudgment of a buffer status can be avoided.

It should be noted that, in this embodiment of this application, the foregoing method may be used to determine whether each buffered frame in the buffer queue meets a frame discarding condition and determine the buffer status of the buffered frame. For example, each buffered frame may be traversed in an order from a buffered frame in a first position to a buffered frame in a tail position in the buffer queue, to perform a step of determining whether each buffered frame in the buffer queue meets the frame discarding condition and determining the buffer status of the buffered frame.

In conclusion, according to the display method provided in Embodiment 2 of this application, in the hands-required operation scenario, a frame discarding opportunity may be determined based on a frame discarding condition and a buffer status of a buffered frame, to output and display an image as soon as possible, thereby improving hand-following performance.

Each method embodiment described in this specification may be an independent solution, or may be combined based on internal logic. Such solutions all fall within the protection scope of this application.

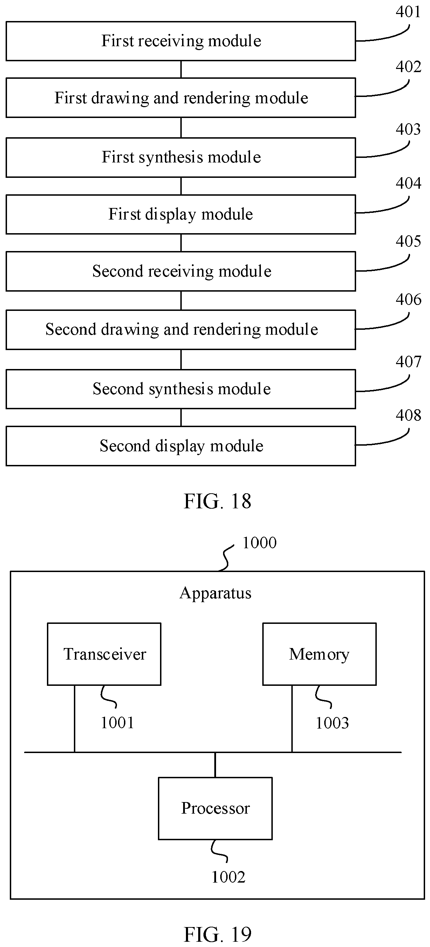

The foregoing describes in detail the methods provided in embodiments of this application. The following describes in detail apparatuses provided in embodiments of this application with reference to FIG. 18 and FIG. 19. It should be understood that the description of the apparatus embodiment corresponds to the description of the method embodiment. Therefore, for content not described in detail, refer to the foregoing method embodiment. For brevity, details are not described herein again.

The foregoing embodiments describe the display method provided in this application. It may be understood that, to implement the foregoing functions, the display apparatus includes a corresponding hardware structure and/or software module for implementing each function. A person skilled in the art should be easily aware that, in combination with the units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the display apparatus may be obtained through division based on the foregoing method examples. For example, each functional module may be obtained through division according to each function, or two or more functions may be integrated into one processing module. The integrated module may be implemented in a form of hardware, or may be implemented in a form of a software functional module. It should be noted that, in embodiments of this application, division into the modules is an example and is merely logical function division. In actual application, another division manner may be used.

FIG. 18 is a schematic diagram of a structure of a display apparatus according to an embodiment of this application. In an embodiment, an electronic device may implement corresponding functions by using the software apparatus shown in FIG. 18. As shown in FIG. 18, the display apparatus may include:

a first receiving module 401, configured to receive a first touch operation input by a user;

a first drawing and rendering module 402, configured to: if a touch scenario of the first touch operation is a hands-free operation scenario, perform drawing and rendering operations on a first image frame in a first configuration duration in the hands-free operation scenario in response to a received first application vertical synchronization signal;

a first synthesis module 403, configured to perform a synthesis operation on a drawn and rendered first image frame in a second configuration duration in the hands-free operation scenario in response to a received first synthesis vertical synchronization signal, where an interval between the first synthesis vertical synchronization signal and the first application vertical synchronization signal is the first configuration duration;

a first display module 404, configured to perform a display operation on a synthesized first image frame in response to a received first hardware vertical synchronization signal, where an interval between the first hardware vertical synchronization signal and the first synthesis vertical synchronization signal is the second configuration duration;

a second receiving module 405, configured to receive a second touch operation input by the user;

a second drawing and rendering module 406, configured to: if a touch scenario of the second touch operation is a hands-required operation scenario, perform drawing and rendering operations on a second image frame in a third configuration duration in the hands-required operation scenario in response to a received second application vertical synchronization signal;

a second synthesis module 407, configured to perform a synthesis operation on a drawn and rendered second image frame in a fourth configuration duration in the hands-required operation scenario in response to a received second synthesis vertical synchronization signal, where an interval between the second synthesis vertical synchronization signal and the second application vertical synchronization signal is the third configuration duration; and

a second display module 408, configured to: perform a display operation on a synthesized second image frame in response to a received second hardware vertical synchronization signal, where an interval between the second hardware vertical synchronization signal and the second synthesis vertical synchronization signal is the fourth configuration duration, and the third configuration duration is less than the first configuration duration, and/or the fourth configuration duration is less than the second configuration duration.

In a possible implementation, the hands-required operation scenario includes a hands-required sliding operation scenario and a hands-required pressing operation scenario.

In a possible implementation, the display apparatus further includes:

a first determining module, configured to: if the touch scenario of the first touch operation is the hands-free operation scenario, determine first configuration information corresponding to the hands-free operation scenario, where the first configuration information includes the first configuration duration and the second configuration duration; and

a second determining module, configured to: if the touch scenario of the second touch operation is the hands-required operation scenario, determine second configuration information corresponding to the hands-required operation scenario, where the second configuration information includes the third configuration duration and the fourth configuration duration.

In a possible implementation, an interval between the second application vertical synchronization signal and a third application vertical synchronization signal is a first duration. An interval between the second application vertical synchronization signal and a fourth application vertical synchronization signal is a second duration. The third application vertical synchronization signal is a previous application vertical synchronization signal of the second application vertical synchronization signal. The fourth application vertical synchronization signal is a next application vertical synchronization signal of the second application vertical synchronization signal.

An interval between the second synthesis vertical synchronization signal and a third synthesis vertical synchronization signal is a third duration. An interval between the second synthesis vertical synchronization signal and a fourth synthesis vertical synchronization signal is a fourth duration. The third synthesis vertical synchronization signal is a previous synthesis vertical synchronization signal of the second synthesis vertical synchronization signal. The fourth synthesis vertical synchronization signal is a next synthesis vertical synchronization signal of the second synthesis vertical synchronization signal.

The first duration is different from the second duration, and/or the third duration is different from the fourth duration.

In a possible implementation, the display apparatus further includes:

a first generating module, configured to generate the second application vertical synchronization signal based on the second hardware vertical synchronization signal and a first signal offset in the hands-required operation scenario; and
a second generating module, configured to generate the second synthesis vertical synchronization signal based on the second hardware vertical synchronization signal and a second signal offset in the hands-required operation scenario.

In a possible implementation, the display apparatus further includes:

an obtaining module, configured to obtain a historical drawing duration for performing the drawing and rendering operations and a historical synthesis duration for performing the synthesis operation; and
a third determining module, configured to determine the third configuration duration and the fourth configuration duration based on the historical drawing duration and the historical synthesis duration, where the third configuration duration is greater than or equal to a maximum drawing duration in the historical drawing duration, and the fourth configuration duration is greater than or equal to a maximum synthesis duration in the historical synthesis duration.

In a possible implementation, the display apparatus further includes:

a fourth determining module, configured to determine a hand-following performance level corresponding to the hands-required operation scenario; and
a fifth determining module, configured to determine the third configuration duration and the fourth configuration duration based on the hand-following performance level, where different hand-following performance levels correspond to different configuration durations.

In a possible implementation, the hands-required operation scenario includes a finger hands-required operation scenario and a stylus hands-required operation scenario. A hand-following performance level corresponding to the stylus hands-required operation scenario is higher than a hand-following performance level corresponding to the finger hands-required operation scenario.

The third configuration duration corresponding to the stylus hands-required operation scenario is less than the third configuration duration corresponding to the finger hands-required operation scenario, and/or the fourth configuration duration corresponding to the stylus hands-required operation scenario is less than the fourth configuration duration corresponding to the finger hands-required operation scenario.

In a possible implementation, the display apparatus further includes:

a sixth determining module, configured to determine a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, where the first preset display time is a preset time at which a display operation is performed on the first buffered frame, and the second preset display time is a preset display time corresponding to a second synthesis vertical synchronization signal;
a seventh determining module, configured to: when the first preset display time is earlier than the second preset display time, determine a third preset display time corresponding to a second buffered frame, where the third preset display time is a preset time at which a display operation is performed on the second buffered frame, and the second buffered frame is a buffered frame that is located after the first buffered frame in the buffer queue; and
a second synthesis module, configured to: when the third preset display time is the same as the second preset display time, or the third preset display time is earlier than the second preset display time, discard the first buffered frame, and perform a synthesis operation on the second buffered frame.

In a possible implementation, the second synthesis module is further configured to: when the third preset display time is later than the second preset display time, and it is determined that a time interval between the currently received second synthesis vertical synchronization signal and a previous second synthesis vertical synchronization signal is less than one Vsync periodicity, or a time interval between a previous second application vertical synchronization signal and a second application vertical synchronization signal used to trigger drawing and rendering operations on the second buffered frame is less than one Vsync periodicity, discard the first buffered frame, and perform the synthesis operation on the second buffered frame.

In a possible implementation, the second synthesis module is further configured to: when the first preset display time is the same as the second preset display time, or the third preset display time is later than the second preset display time, perform the synthesis operation on the first buffered frame.

In a possible implementation, the frame discarding condition includes that a timestamp attribute corresponding to the first preset display time of the first buffered frame is an automatic timestamp, a current refresh rate is greater than 60 Hz, and a time interval from a previous discarded image frame in the buffer queue is greater than a preset time interval threshold.

FIG. 19 is a schematic diagram of a structure of a display apparatus according to embodiment of this application. In an embodiment, an electronic device may implement corresponding functions by using the hardware apparatus shown in FIG. 19. As shown in FIG. 19, the apparatus 1000 may include a transceiver 1001, a processor 1002, and a memory 1003. The transceiver 1001 may be configured to receive a touch operation of a user. The processor 1002 may include one or more processing units. For example, the processor 1002 may include an application processor, a modem processor, a graphics processing unit, an image signal processor, a controller, a video codec, a digital signal processor, a baseband processor, and/or a neural-network processing unit. Different processing units may be separate devices, or may be integrated into one or more processors. The memory 1003 is coupled to the processor 1002, and is configured to store various software programs and/or a plurality of sets of instructions. The memory 1003 may include a volatile memory and/or a non-volatile memory.

The apparatus 1000 may perform the operations performed in the foregoing method embodiments.

For example, in an optional embodiment of this application, the transceiver 1001 is configured to: receive a first touch operation input by a user, and receive a second touch operation input by the user. The processor 1002 is configured to: if a touch scenario of the first touch operation is a hands-free operation scenario, perform drawing and rendering operations on a first image frame in a first configuration duration in the hands-free operation scenario in response to a received first application vertical synchronization signal; perform a synthesis operation on a drawn and rendered first image frame in a second configuration duration in the hands-free operation scenario in response to a received first synthesis vertical synchronization signal, where an interval between the first synthesis vertical synchronization signal and the first application vertical synchronization signal is the first configuration duration; perform a display operation on a synthesized first image frame in response to a received first hardware vertical synchronization signal, where an interval between the first hardware vertical synchronization signal and the first synthesis vertical synchronization signal is the second configuration duration; if a touch scenario of the second touch operation is a hands-required operation scenario, perform drawing and rendering operations on a second image frame in a third configuration duration in the hands-required operation scenario in response to a received second application vertical synchronization signal; perform a synthesis operation on a drawn and rendered second image frame in a fourth configuration duration in the hands-required operation scenario in response to a received second synthesis vertical synchronization signal, where an interval between the second synthesis vertical synchronization signal and the second application vertical synchronization signal is the third configuration duration; and perform a display operation on a synthesized second image frame in response to a received second hardware vertical synchronization signal, where an interval between the second hardware vertical synchronization signal and the second synthesis vertical synchronization signal is the fourth configuration duration, and the third configuration duration is less than the first configuration duration, and/or the fourth configuration duration is less than the second configuration duration.

In a possible implementation, the hands-required operation scenario includes a hands-required sliding operation scenario and a hands-required pressing operation scenario.

In a possible implementation, the processor 1002 is further configured to: if the touch scenario of the first touch operation is the hands-free operation scenario, determine first configuration information corresponding to the hands-free operation scenario, where the first configuration information includes the first configuration duration and the second configuration duration; and if the touch scenario of the second touch operation is the hands-required operation scenario, determine second configuration information corresponding to the hands-required operation scenario, where the second configuration information includes the third configuration duration and the fourth configuration duration.

In a possible implementation, an interval between the second application vertical synchronization signal and a third application vertical synchronization signal is a first duration. An interval between the second application vertical synchronization signal and a fourth application vertical synchronization signal is a second duration. The third application vertical synchronization signal is a previous application vertical synchronization signal of the second application vertical synchronization signal. The fourth application vertical synchronization signal is a next application vertical synchronization signal of the second application vertical synchronization signal. An interval between the second synthesis vertical synchronization signal and a third synthesis vertical synchronization signal is a third duration. An interval between the second synthesis vertical synchronization signal and a fourth synthesis vertical synchronization signal is a fourth duration. The third synthesis vertical synchronization signal is a previous synthesis vertical synchronization signal of the second synthesis vertical synchronization signal. The fourth synthesis vertical synchronization signal is a next synthesis vertical synchronization signal of the second synthesis vertical synchronization signal. The first duration is different from the second duration, and/or the third duration is different from the fourth duration.

In a possible implementation, the processor 1002 is further configured to: generate the second application vertical synchronization signal based on the second hardware vertical synchronization signal and a first signal offset in the hands-required operation scenario; and generate the second synthesis vertical synchronization signal based on the second hardware vertical synchronization signal and a second signal offset in the hands-required operation scenario.

In a possible implementation, the processor 1002 is further configured to: obtain a historical drawing duration for performing the drawing and rendering operations and a historical synthesis duration for performing the synthesis operation; and determine the third configuration duration and the fourth configuration duration based on the historical drawing duration and the historical synthesis duration. The third configuration duration is greater than or equal to a maximum drawing duration in the historical drawing duration. The fourth configuration duration is greater than or equal to a maximum synthesis duration in the historical synthesis duration.

In a possible implementation, the processor 1002 is further configured to: determine a hand-following performance level corresponding to the hands-required operation scenario; and determine the third configuration duration and the fourth configuration duration based on the hand-following performance level. Different hand-following performance levels correspond to different configuration durations.

In a possible implementation, the hands-required operation scenario includes a finger hands-required operation scenario and a stylus hands-required operation scenario. A hand-following performance level corresponding to the stylus hands-required operation scenario is higher than a hand-following performance level corresponding to the finger hands-required operation scenario. The third configuration duration corresponding to the stylus hands-required operation scenario is less than the third configuration duration corresponding to the finger hands-required operation scenario, and/or the fourth configuration duration corresponding to the stylus hands-required operation scenario is less than the fourth configuration duration corresponding to the finger hands-required operation scenario.

In a possible implementation, the processor 1002 is further configured to: determine a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, where the first preset display time is a preset time at which a display operation is performed on the first buffered frame, and the second preset display time is a preset display time corresponding to a second synthesis vertical synchronization signal; when the first preset display time is earlier than the second preset display time, determine a third preset display time corresponding to a second buffered frame, where the third preset display time is a preset time at which a display operation is performed on the second buffered frame, and the second buffered frame is a buffered frame that is located after the first buffered frame in the buffer queue; and when the third preset display time is the same as the second preset display time, or the third preset display time is earlier than the second preset display time, discard the first buffered frame, and perform a synthesis operation on the second buffered frame.

In a possible implementation, the processor 1002 is further configured to: when the third preset display time is later than the second preset display time, and it is determined that a time interval between the currently received second synthesis vertical synchronization signal and a previous second synthesis vertical synchronization signal is less than one Vsync periodicity, or a time interval between a previous second application vertical synchronization signal and a second application vertical synchronization signal used to trigger drawing and rendering operations on the second buffered frame is less than one Vsync periodicity, discard the first buffered frame, and perform the synthesis operation on the second buffered frame.

In a possible implementation, the processor 1002 is further configured to: when the first preset display time is the same as the second preset display time, or the third preset display time is later than the second preset display time, perform the synthesis operation on the first buffered frame.

In a possible implementation, the frame discarding condition includes that a timestamp attribute corresponding to the first preset display time of the first buffered frame is an automatic timestamp, a current refresh rate is greater than 60 Hz, and a time interval from a previous discarded image frame in the buffer queue is greater than a preset time interval threshold.

In an implementation process, the steps of the foregoing methods may be completed by using an integrated logic circuit of hardware in the processor or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware thereof. To avoid repetition, details are not described herein again.

It should be noted that, the processor in embodiments of this application may be an integrated circuit chip, and has a signal processing capability. In an implementation process, the steps of the foregoing method embodiments may be implemented by using an integrated logic circuit of hardware in the processor or by using instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware thereof.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. By way of example but not limitative description, a plurality forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the apparatus and the method described in this specification includes but is not limited to these memories and any memory in another appropriate type.

According to the method provided in embodiments of this application, an embodiment of this application further provides a computer program product. The computer program product includes computer program code or instructions. When the computer programs or the instructions are run on a computer, the computer is enabled to perform the method according to any one of the method embodiments.

According to the method provided in embodiments of this application, an embodiment of this application further provides a computer storage medium. The computer storage medium stores computer programs or instructions. When the computer programs or the instructions are run on a computer, the computer is enabled to perform the method according to any one of the method embodiments.

A person of ordinary skill in the art may be aware that, in combination with illustrative logical blocks (illustrative logical block) and steps (step) described in embodiments disclosed in this specification, this application may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for simple and clear description, for specific work processes of the foregoing described apparatus and module, reference may be made to corresponding processes in the foregoing method embodiments. Details are not described herein again.

In embodiments provided in this application, it should be understood that the disclosed apparatus and method may be implemented in other manners. For example, the foregoing described apparatus embodiment is merely an example. For example, division into the modules is merely logical function division. In actual implementation, there may be another division manner. For example, a plurality of modules or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical, mechanical, or another form.

The modules described as separate parts may or may not be physically separate; and parts displayed as modules may or may not be physical units, and may be located at one position or may be distributed on a plurality of network units. Some or all of the units may be selected according to actual requirements to achieve the objectives of the solutions of the embodiments.

In addition, functional modules in the embodiments of this application may be integrated into one processing unit, or each module may exist alone physically, or two or more modules are integrated into one unit.

When the function is implemented in a form of a software functional unit and sold or used as an independent product, the function may be stored in a computer-readable storage medium. Based on such an understanding, the technical solutions of this application essentially, or parts contributing to the conventional technologies, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The apparatus, the computer storage medium, and the computer program product provided in embodiments of this application are all configured to perform the method provided above. Therefore, beneficial effects achieved by the apparatus, the computer storage medium, and the computer program product may refer to beneficial effects corresponding to the methods provided above. Details are not described herein again.

It should be understood that, in each embodiment of this application, an execution order of the steps is determined based on functions and internal logic of the steps. A sequence number of each step does not mean an execution order. An implementation process of the embodiment is not limited.

The parts of this specification are all described in a progressive manner. For same or similar parts in embodiments, refer to such embodiments. Descriptions of each embodiment focus on a difference from other embodiments. Especially, embodiments of an apparatus, a computer storage medium, and a computer program product are basically similar to a method embodiment, and therefore is described briefly. For related parts, refer to descriptions in the method embodiment.

Although exemplary embodiments of this application have been described, once persons skilled in the art know the basic creative concept, they can make additional changes and modifications to these embodiments. Therefore, the following claims are intended to be construed as to cover the exemplary embodiments and all changes and modifications falling within the scope of this application.

The foregoing implementations of this application are not intended to limit the protection scope of this application.

**Claims**

1. A display method, wherein the method is applied to an electronic device and comprises:

　　determining a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition, wherein the first preset display time is a preset time at which a display operation is performed on the first buffered frame, and the second preset display time is a preset display time corresponding to a second synthesis vertical synchronization Vsync-SF signal;
　　when the first preset display time is earlier than the second preset display time, determining a third preset display time corresponding to a second buffered frame, wherein the third preset display time is a preset time at which a display operation is performed on the second buffered frame, and the second buffered frame is a buffered frame that is located after the first buffered frame in the buffer queue; and
　　when the third preset display time is the same as the second preset display time, or the third preset display time is earlier than the second preset display time, discarding the first buffered frame, and performing a synthesis operation on the second buffered frame.

2. The method according to claim 1, wherein the method further comprises:
　　when the third preset display time is later than the second preset display time, and it is determined that a time interval between the currently received second synthesis vertical synchronization signal and a previous second synthesis vertical synchronization signal is less than one Vsync periodicity, or a time interval between a previous second application vertical synchronization signal and a second application vertical synchronization Vsync-APP signal used to trigger drawing and rendering operations on the second buffered frame is less than one Vsync periodicity, discarding the first buffered frame, and performing the synthesis operation on the second buffered frame.

3. The method according to claim 1, wherein the method further comprises:
when the first preset display time is the same as the second preset display time, or the third preset display time is later than the second preset display time, performing the synthesis operation on the first buffered frame.

4. The method according to claim 1, wherein the frame discarding condition comprises that a timestamp attribute corresponding to the first preset display time of the first buffered frame is an automatic timestamp, a current refresh rate is greater than 60 Hz, and a time interval from a previous discarded image frame in the buffer queue is greater than a preset time interval threshold.

5. The method according to claim 1, wherein the determining a second preset display time and a first preset display time corresponding to a first buffered frame, when there are a plurality of buffered frames in a buffer queue used to buffer a drawn and rendered image frame, and the first buffered frame that is in a first position in the buffer queue meets a frame discarding condition comprises:

receiving a second touch operation input by a user; and
if a touch scenario of the second touch operation is a hands-required operation scenario, determining the second preset display time and the first preset display time corresponding to the first buffered frame, when there are the plurality of buffered frames in the buffer queue used to buffer the drawn and rendered image frame, and the first buffered frame that is in the first position in the buffer queue meets the frame discarding condition.

6. The method according to claim 5, before the receiving a second touch operation input by a user, further comprising:

receiving a first touch operation input by the user;
if a touch scenario of the first touch operation is a hands-free operation scenario, performing drawing and rendering operations on a first image frame in a first configuration duration in the hands-free operation scenario in response to a received first application vertical synchronization Vsync-APP signal;
performing a synthesis operation on the drawn and rendered first image frame in a second configuration duration in the hands-free operation scenario in response to a received first synthesis vertical synchronization Vsync-SF signal, wherein an interval between the first synthesis vertical synchronization signal and the first application vertical synchronization signal is the first configuration duration; and
performing a display operation on the synthesized first image frame in response to a received first hardware vertical synchronization Vsync-HW signal, wherein an interval between the first hardware vertical synchronization signal and the first synthesis vertical synchronization signal is the second configuration duration.

7. The method according to claim 6, after the receiving a second touch operation input by a user, further comprising:

if a touch scenario of the second touch operation is a hands-required operation scenario, performing drawing and rendering operations on the second image frame in a third configuration duration in the hands-required operation scenario in response to the received second application vertical synchronization signal;
performing a synthesis operation on the drawn and rendered second image frame in a fourth configuration duration in the hands-required operation scenario in response to the received second synthesis vertical synchronization signal, wherein an interval between the second synthesis vertical synchronization signal and the second application vertical synchronization signal is the third configuration duration; and
performing a display operation on the synthesized second image frame in response to a received second hardware vertical synchronization Vsync-HW signal, wherein an interval between the second hardware vertical synchronization signal and the second synthesis vertical synchronization signal is the fourth configuration duration, and
the third configuration duration is less than the first configuration duration, and/or the fourth configuration duration is less than the second configuration duration.

8. The method according to any one of claims 5 to 7, wherein the hands-required operation scenario comprises a hands-required sliding operation scenario and a hands-required pressing operation scenario.

9. The method according to claim 7, wherein the method further comprises:

if the touch scenario of the first touch operation is the hands-free operation scenario, determining first configuration information corresponding to the hands-free operation scenario, wherein the first configuration information comprises the first configuration duration and the second configuration duration; and

if the touch scenario of the second touch operation is the hands-required operation scenario, determining second configuration information corresponding to the hands-required operation scenario, wherein the second configuration information comprises the third configuration duration and the fourth configuration duration.

10. The method according to claim 7, wherein an interval between the second application vertical synchronization signal and a third application vertical synchronization signal is a first duration, an interval between the second application vertical synchronization signal and a fourth application vertical synchronization signal is a second duration, the third application vertical synchronization signal is a previous application vertical synchronization signal of the second application vertical synchronization signal, and the fourth application vertical synchronization signal is a next application vertical synchronization signal of the second application vertical synchronization signal;

an interval between the second synthesis vertical synchronization signal and a third synthesis vertical synchronization signal is a third duration, an interval between the second synthesis vertical synchronization signal and a fourth synthesis vertical synchronization signal is a fourth duration, the third synthesis vertical synchronization signal is a previous synthesis vertical synchronization signal of the second synthesis vertical synchronization signal, and the fourth synthesis vertical synchronization signal is a next synthesis vertical synchronization signal of the second synthesis vertical synchronization signal; and

the first duration is different from the second duration, and/or the third duration is different from the fourth duration.

11. The method according to claim 7, wherein if the touch scenario of the second touch operation is the hands-required operation scenario, the method further comprises:

generating the second application vertical synchronization signal based on the second hardware vertical synchronization signal and a first signal offset in the hands-required operation scenario; and

generating the second synthesis vertical synchronization signal based on the second hardware vertical synchronization signal and a second signal offset in the hands-required operation scenario.

12. The method according to claim 7, wherein the method further comprises:

obtaining a historical drawing duration for performing the drawing and rendering operations and a historical synthesis duration for performing the synthesis operation; and

determining the third configuration duration and the fourth configuration duration based on the historical drawing duration and the historical synthesis duration, wherein the third configuration duration is greater than or equal to a maximum drawing duration in the historical drawing duration, and the fourth configuration duration is greater than or equal to a maximum synthesis duration in the historical synthesis duration.

13. The method according to claim 7, wherein the method further comprises:

determining a hand-following performance level corresponding to the hands-required operation scenario; and

determining the third configuration duration and the fourth configuration duration based on the hand-following performance level, wherein different hand-following performance levels correspond to different configuration durations.

14. The method according to claim 13, wherein the hands-required operation scenario comprises a finger hands-required operation scenario and a stylus hands-required operation scenario, and a hand-following performance level corresponding to the stylus hands-required operation scenario is higher than a hand-following performance level corresponding to the finger hands-required operation scenario; and

the third configuration duration corresponding to the stylus hands-required operation scenario is less than the third configuration duration corresponding to the finger hands-required operation scenario, and/or the fourth configuration duration corresponding to the stylus hands-required operation scenario is less than the fourth configuration duration corresponding to the finger hands-required operation scenario.

15. An electronic device, comprising a memory and a processor, wherein the memory is coupled to the processor, the memory is configured to store computer program code, the computer program code comprises computer instructions, and when the processor executes the computer instructions, the electronic device is enabled to perform the method according to any one of claims 1 to 14.

16. A computer storage medium, wherein the computer storage medium stores computer programs or instructions, and when the computer programs or instructions are executed, the method according to any one of claims 1 to 14 is performed.

| Algorithm library Convert a pressure value into coordinates | Coordinates value → | Input module | Coordinates value → | Application |
| --- | --- | --- | --- | --- |

Vsync-APP signal

Pressure value ↑

A user touches a touchscreen →

Touchscreen TP

Drawn and rendered image

Vsync-SF signal

Synthesis module

Synthesized image

Vsync-HW signal

Display module

FIG. 1

Touch control display

Generate report-point data

A report point is consumed

Display

Display on the display

A          T1          B          T2          C          T3          D          T4          E

Touch control delay

FIG. 2

Tapping operation scenario

Vsync-APP signal (90 Hz)

Frame 1 | Frame 2 | Frame 3 | Frame 4 | Frame 5 | Frame 6
11 | 12 | 13 | 14 | 15 | 16

11.1 ms

Vsync-SF signal (90 Hz)

Frame 1 | Frame 2 | Frame 3 | Frame 4 | Frame 5
21 | 22 | 23 | 24 | 25 | 26

11.1 ms

Vsync-HW signal (90 Hz)

Frame 1 | Frame 2 | Frame 3 | Frame 4
31 | 32 | 33 | 34 | 35 | 36

11.1 ms
13.1 ms

Synthesis duration
19.2 ms
Drawing duration

FIG. 3

Tapping operation scenario

| Draw and render | Synthesis | Display |

Vsync-APP
signal

Vsync-SF
signal

Vsync-HW
signal

19.2 ms

Drawing duration

13.1 ms

Synthesis
duration

Application

Frame 1

8.6 ms

10.6 ms

Actual
consumed
duration

Idle
duration

Synthesis
module

Frame 1

8.1 ms

5.2 ms

Actual
consumed
duration

Idle
duration

Display
module

Frame 1

0 ms    11.1 ms    22.2 ms    33.3 ms    44.4 ms

FIG. 4

FIG. 5

EP 4 432 056 A1

Electronic device 100

Antenna 1

Antenna 2

| Mobile communication module 2G/3G/4G/5G [150] | Wireless communication module BT/WLAN/GNSS/NFC/IR/FM [160] |

Loudspeaker [170A]

Telephone receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 6

| Application layer | Camera | Calendar | Map | WLAN | Music | SMS |
| | Gallery | Phone | Navigation | Bluetooth | Videos | ... |

| Application framework layer | Window manager | Content provider | Phone manager | Resource manager |
| | Notification manager | View system | ... | |

| System libraries | Surface manager | Three-dimensional image processing library | Android runtime |
| | Two-dimensional graphics engine | Media library | ... | |

| Kernel layer | Display driver | Camera driver | |
| | Audio driver | Sensor driver | ... |

FIG. 7

| Receive a first touch operation of a user | S101 |

| If a touch scenario of the first touch operation is a hands-free operation scenario, perform drawing and rendering operations on a first image frame in a first configuration duration in the hands-free operation scenario in response to a received first Vsync-APP signal | S102 |

| Perform a synthesis operation on a drawn and rendered first image frame in a second configuration duration in the hands-free operation scenario in response to a received first Vsync-SF signal | S103 |

| Perform a display operation on a synthesized first image frame in response to a received first Vsync-HW signal | S104 |

| Receive a second touch operation input by the user | S105 |

| If a touch scenario of the second touch operation is a hands-required operation scenario, perform drawing and rendering operations on a second image frame in a third configuration duration in the hands-required operation scenario in response to a received second Vsync-APP signal | S106 |

| Perform a synthesis operation on a drawn and rendered second image frame in a fourth configuration duration in the hands-required operation scenario in response to a received second Vsync-SF signal | S107 |

| Perform a display operation on a synthesized second image frame in response to a received second Vsync-HW signal | S108 |

FIG. 8

| Input module | Application | Synthesis module | Display module |
|---|---|---|---|

S201: Determine an input event type, where the input event type includes Down, Move, and Up

S202: When the input event type is Down or Up, send indication information to the synthesis module, where the indication information includes the input event type

S203: Determine a current touch scenario based on the received input event type in response to a Vsync-SF signal

S204: Invoke configuration information corresponding to the current touch scenario, where the configuration information includes a drawing duration configured for drawing and rendering operations, a synthesis duration configured for a synthesis operation, a Vsync-APP signal offset, and a Vsync-SF signal offset

S205: Adjust a Vsync-APP signal and the Vsync-SF signal based on the Vsync-APP signal offset and the Vsync-SF signal offset in the configuration information

S206: Vsync-APP signal obtained after offset adjustment

| TO FIG. 9B | TO FIG. 9B | TO FIG. 9B | TO FIG. 9B |
|---|---|---|---|

FIG. 9A

CONT.
FROM
FIG. 9A

CONT.
FROM
FIG. 9A

CONT.
FROM
FIG. 9A

CONT.
FROM
FIG. 9A

S207: Perform drawing and
rendering operations in response
to the Vsync-APP signal obtained
after offset adjustment

S208: Drawn and
rendered image

S209: Perform a synthesis operation
in response to a Vsync-SF signal at
an interval of the drawing duration
from the adjusted Vsync-APP signal

S2010: Synthesized
image

S2011: Perform a display
operation in response to a
Vsync-HW signal at an interval
of the synthesis duration from an
adjusted Vsync-SF signal

FIG. 9B

FIG. 10

Hands-required sliding operation scenario

FIG. 11

EP 4 432 056 A1

Hands-required sliding operation scenario

FIG. 12

FIG. 13

FIG. 14

Receive a second touch operation input by a user ⟋ S301

Determine whether a first buffered frame in a buffer queue meets a frame discarding condition ⟋ S302

No

End

Yes

Determine a buffer status of the first buffered frame ⟋ S303

current

S307 ⟋ Determine to perform a synthesis operation on the first buffered frame in a current Vsync periodicity

late

early

S304 ⟋ Determine a buffer status of a second buffered frame

S308 ⟋ Determine to perform a synthesis operation on the first buffered frame in a next Vsync periodicity

late or current

S306 ⟋ early

S305 ⟋ Determine to discard the first buffered frame, and perform a synthesis operation on the second buffered frame in a current Vsync periodicity

Determine to perform a synthesis operation on the first buffered frame in a current Vsync periodicity

FIG. 15

FIG. 16

90 Hz
11.1 ms          3.7 ms     120 Hz
                            8.3 ms           8.3 ms

11          12      13          14          15          Vsync-
                                                        APP signal

Frame 0: T2

11.1 ms          8.3 ms

21          22          23          24          25      Vsync-SF
                                                        signal

Frame 0: T2, TA

90 Hz                       120 Hz

31          32      33          34          35          Vsync-
                                                        HW signal

                            Frame 0

T0              T1      TA          T2

FIG. 17

First receiving module — 401

First drawing and rendering module — 402

First synthesis module — 403

First display module — 404

Second receiving module — 405

Second drawing and rendering module — 406

Second synthesis module — 407

Second display module — 408

FIG. 18

1000

Apparatus

Transceiver

1001

Memory

1003

Processor

1002

FIG. 19

## INTERNATIONAL SEARCH REPORT

| International application No. |
| --- |
| **PCT/CN2023/127903** |

**A. CLASSIFICATION OF SUBJECT MATTER**

G06F 3/041(2006.01)i

According to International Patent Classification (IPC) or to both national classification and IPC

**B. FIELDS SEARCHED**

Minimum documentation searched (classification system followed by classification symbols)

IPC: G06F 3/-, H04N 21/-

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 缓存, 缓冲, 渲染, 送显, 合成, 滞后, 卡顿, 帧, 丢, 时间, 时长, 预设, 预定, 垂直同步, buffer+, render+, presentation, synthesiz+, compos+, lag, freez+, frozen, frame, miss+, time, length, preset, predeterminat+, vertical synchronization

**C. DOCUMENTS CONSIDERED TO BE RELEVANT**

| Category* | Citation of document, with indication, where appropriate, of the relevant passages | Relevant to claim No. |
| --- | --- | --- |
| A | CN 111124230 A (TENCENT TECHNOLOGY (SHENZHEN) CO., LTD.) 08 May 2020 (2020-05-08)<br>entire document | 1-16 |
| A | CN 115412766 A (HUAWEI TECHNOLOGIES CO., LTD.) 29 November 2022 (2022-11-29)<br>entire document | 1-16 |
| A | CN 115097994 A (HONOR TERMINAL CO., LTD.) 23 September 2022 (2022-09-23)<br>entire document | 1-16 |
| A | US 2013271487 A1 (RESEARCH IN MOTION LIMITED) 17 October 2013 (2013-10-17)<br>entire document | 1-16 |
| PX | CN 116069187 A (HONOR TERMINAL CO., LTD.) 05 May 2023 (2023-05-05)<br>description, paragraphs [0154]-[0318] | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 November 2023** | **26 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/127903**

| Patent document cited in search report | | | Publication date (day/month/year) | Patent family member(s) | | | Publication date (day/month/year) |
|---|---|---|---|---|---|---|---|
| CN | 111124230 | A | 08 May 2020 | CN | 111124230 | B | 17 November 2020 |
| CN | 115412766 | A | 29 November 2022 | None | | | |
| CN | 115097994 | A | 23 September 2022 | CN | 115097994 | B | 09 May 2023 |
| US | 2013271487 | A1 | 17 October 2013 | None | | | |
| CN | 116069187 | A | 05 May 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310041624